# EUROPEAN PATENT APPLICATION

(11) **EP 2 544 140 A1**
(43) Date of publication of application: **09.01.2013**
(21) Application number: 11750357.3
(22) Date of filing: 28.02.2011
(51) Int. Cl.: G06Q 50/00

(54) **ENERGY MANAGEMENT APPARATUS, METHOD, AND SYSTEM**

(30) Priority: 01.03.2010 JP 2010043943
(71) Applicant: Panasonic Corporation, Kadoma-shi Osaka 571-8501 (JP)
(72) Inventor: ZHANG, Yibo, Osaka-shi, Osaka 540-6207 (JP)
(74) Representative: Kügele, Bernhard
(86) International application number: PCT/JP2011/001142
(87) International publication number: WO 2011/108244

(57) **Abstract**

A first energy management apparatus (101a) includes an apparatus information processing unit (301) configured to store collected information as an apparatus profile, an apparatus operation processing unit (302), an energy consumption history management unit (305) configured to store collected energy consumption histories, a control history processing unit (306) configured to generate an optimum energy consumption pattern from the energy consumption history, and a control history transmission unit (303) configured to transmit the optimum energy consumption pattern to a second energy management apparatus (101b) in another building adjacent to the building of the first energy management apparatus (101a).

## Description

### [Technical Field]

The present invention relates to a technique for controlling energy consumption among a plurality of buildings, on the basis of information from utilities.

### [Background Art]

Energy consumption control is executed in houses (detached and condominium) and buildings such as an office building. Controlling methods currently employed include setting a permissible value of energy consumption with respect to each type of apparatuses, and automatically controlling the operation of each single apparatus on the basis of sensing information. These methods contribute to suppressing the peak power consumption in the building, and to improving the energy utilization efficiency of each single apparatus.

For example, PTL 1 discloses a technique of collecting power consumption information of apparatuses and learning and classifying the power consumption of each energy system. In the case where the power consumption exceeds a permissible threshold, the power consumption of each classified rank is aggregated with respect to the respective energy systems. Then the power consumption of the apparatus the aggregated amount of which is greater than the learned power consumption is suppressed.

In addition, PTL 2 discloses a technique of collecting power consumption of a specific type of apparatuses, and creating a control method that makes the power consumption of the specific apparatuses minimal, on the basis of the collected power consumption. At the same time as creating the control method that makes the power consumption minimal, a forecast of the energy saving effect is made that would be attained by controlling the specific apparatuses in accordance with the generated method. Then the forecast thus made up is applied to all the apparatuses of that specific type, as a proposal of energy-saving measures.

### [Citation List]

### [Patent Literature]

[PTL 1] Japanese Unexamined Patent Application Publication No. 11-178247
[PTL 2] Japanese Unexamined Patent Application Publication No. 2003-158823

### [Summary of Invention]

### [Technical Problem]

The above-cited techniques allow the peak power consumption in the building to be suppressed, and the energy utilization efficiency of each single apparatus to be improved. However, an optimum control of the energy-related apparatuses (apparatuses that supply or consume an energy, energy storage apparatuses, and so forth) in the entire building cannot be executed, and the control experience (control experience information) obtained through the adopted control method cannot be diffused.

In addition, the cost and structure of powers are expected to dynamically fluctuate with the expansion of utilization of renewable energies. Accordingly, a technique has to be established that suppresses the energy consumption of the entire building, in accordance with such a fluctuation.

On the other hand, the energy consumption and the cost therefor are often largely different among a plurality of similar buildings depending on the attitude of users of the building, despite that those buildings are located in the same district of the same weather and having the same utilization contracts with electricity companies and gas companies. Such a difference is produced primarily by the style of use of the users, the way of using the apparatuses, and different settings for the operation. In the case of an independent single apparatus, a proper energy-saving using mode can be instructed to the user through a manual. However, when a plurality of apparatuses is used in combination it is difficult to instruct a proper energy-saving using mode to the user, and hence the user can only depend on his/her own knowledge and experience.

The present invention has been accomplished in view of the foregoing situation, with an object to provide a method of transmitting a proper energy-saving control experience (energy-saving control experience information) with respect to a combination of apparatuses among a plurality of buildings, and an instruction method of energy-saving control experience information (energy management apparatus) that enables the energy-saving control method for the district to be automatically and rapidly diffused.

### [Solution to Problem]

Accordingly, an aspect of the present invention provides an energy management apparatus that manages supply and demand of an energy in a building, the apparatus including an apparatus information processing unit connected to an energy-related apparatus used in the building through an internal communication network, and configured to collect in advance information (for identification) of a function and performance spec of the energy-related apparatus through the internal communication network and to store the information as (information of) an apparatus profile ; an apparatus operation processing unit configured to collect an energy consumption history including an operation history of the energy-related apparatus and the energy consumed through a first time unit by operating the energy-related apparatus (for example, information indicating the amount of consumed energy); an energy consumption history management unit configured to store the energy consumption history as an energy consumption history profile; a control history processing unit configured to extract the energy consumption history that contains an amount evaluated (identified) as optimum on the basis of predetermined criteria, from among a plurality of the energy consumption history profiles representing substantially the same total amount of energy consumption through a second time unit, and to generate an optimum energy consumption pattern including the extracted energy consumption history; and a control history transmission unit configured to transmit the generated optimum energy consumption pattern through a first external communication network to a second energy management apparatus that controls supply and demand of an energy outside the building and in a building adjacent thereto.

In another aspect, the present invention provides an energy management apparatus (a second energy management apparatus) that manages supply and demand of an energy in a building, the apparatus including a control history transmission unit configured to receive an optimum energy consumption pattern from a first energy management apparatus that controls supply and demand of an energy outside the building of the second energy management apparatus and in a building adjacent thereto; and an apparatus control application unit configured to accept the received optimum energy consumption pattern as a reference plan for operating energy-related apparatuses in the building of the second energy management apparatus and to execute the optimum energy consumption pattern, in the case where similarity of an apparatus profile contained in the received optimum energy consumption pattern in comparison with an apparatus profile of the second energy management apparatus is not lower than a predetermined threshold, and the received optimum energy consumption pattern is superior to an optimum energy consumption pattern of the second energy management apparatus on the basis of predetermined criteria.

Here, managing the supply and demand of an energy includes, for example, controlling an inputting or outputting operation of an energy using energy-related apparatuses. The apparatus profile corresponds, for example, to information by which the type of the energy-related apparatus can be identified. The situation where the two amounts are equivalent may include the case where one is within a predetermined range with respect to the other, or the same as the other. The expression "evaluated as optimum" refers, for example, to the case where the calculated amount is the most appropriate value. The term "adjacent" refers, for example, to not being separated by more than a predetermined distance, but being within that distance.

### [Advantageous Effects of Invention]

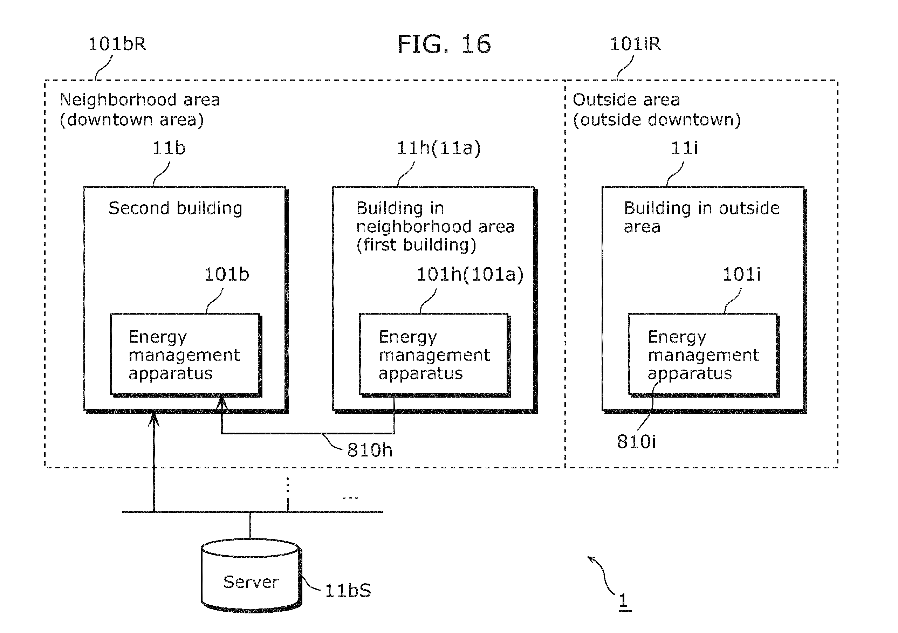

The energy management apparatus configured as above enables users of a plurality of buildings in the same district, who are not acquainted with one another, to share energy-saving control experience information (for example, FIG. 16). This leads to suppression of energy consumption cost and reduction of CO₂ emission, not only in individual buildings but over the entire district.

While an appropriate control can be easily executed, the executed control can be sufficiently appropriate.

### [Brief Description of Drawings]

[FIG. 1]

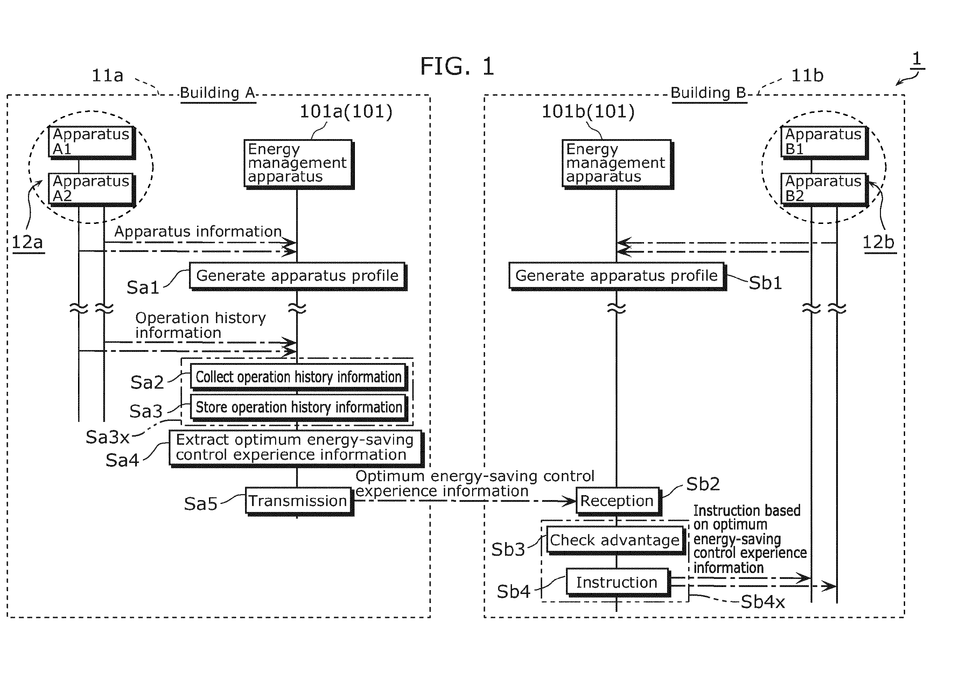

   FIG. 1 is a block diagram showing an outline of processing.
[FIG. 2]

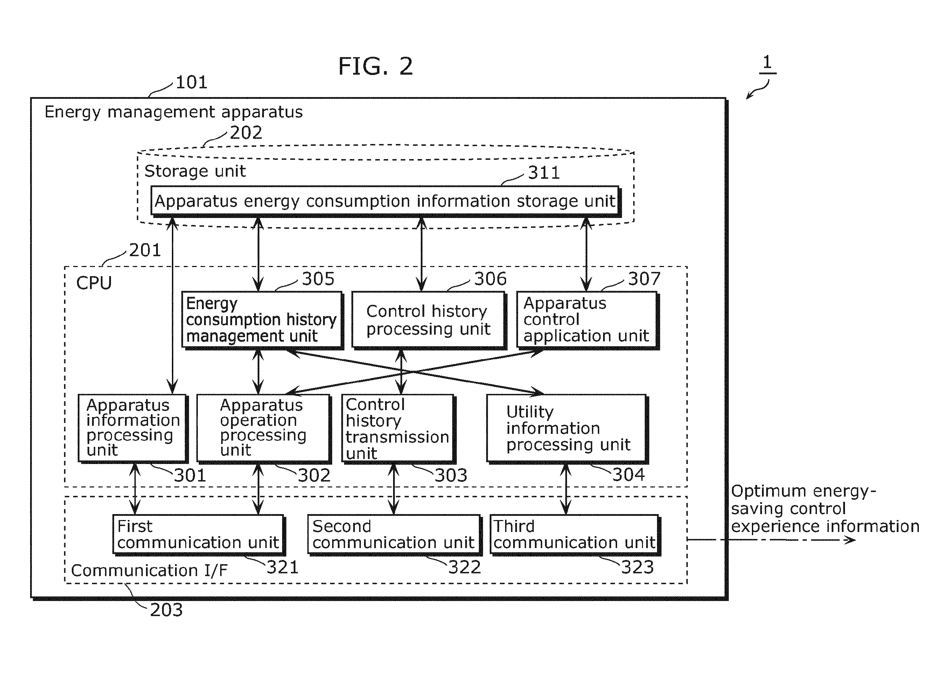

   FIG. 2 is a block diagram showing a configuration of an energy management apparatus.
[FIG. 3]

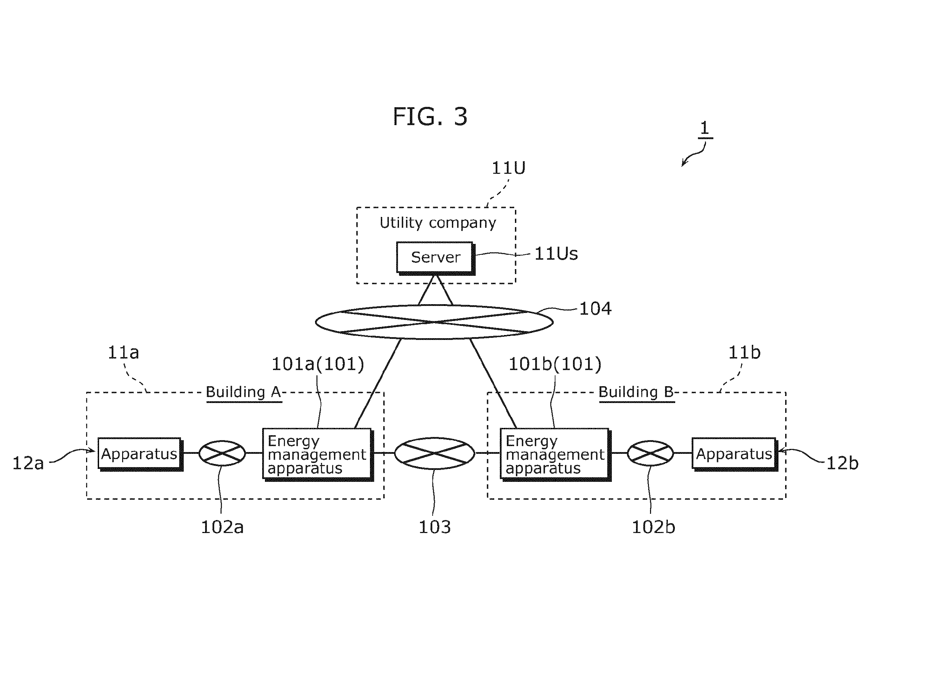

   FIG. 3 is a block diagram showing a system configuration.
[FIG. 4]

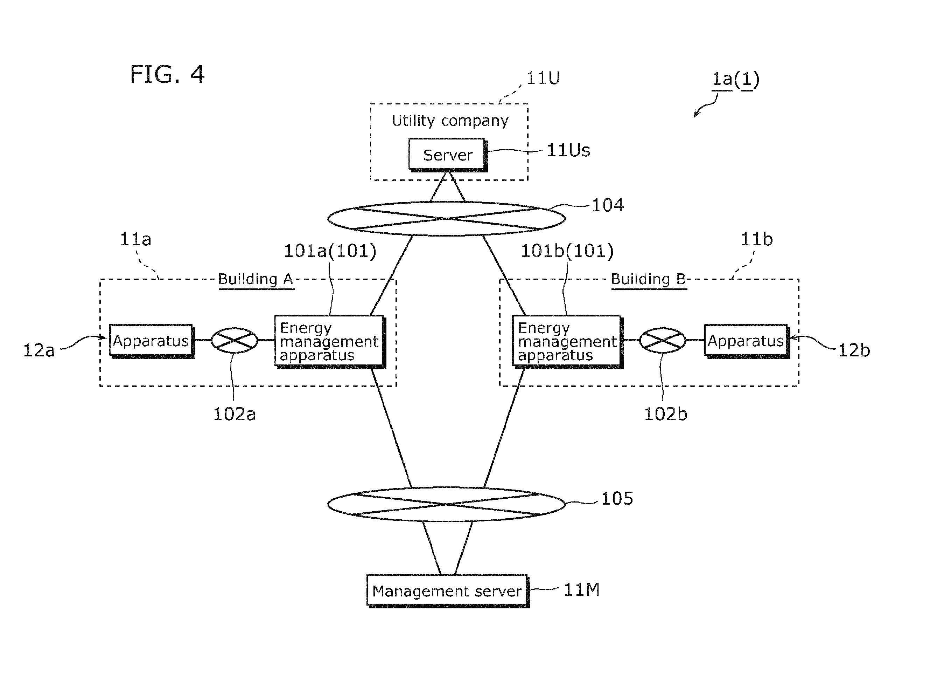

   FIG. 4 is a block diagram showing a system configuration including a management server.
[FIG. 5]

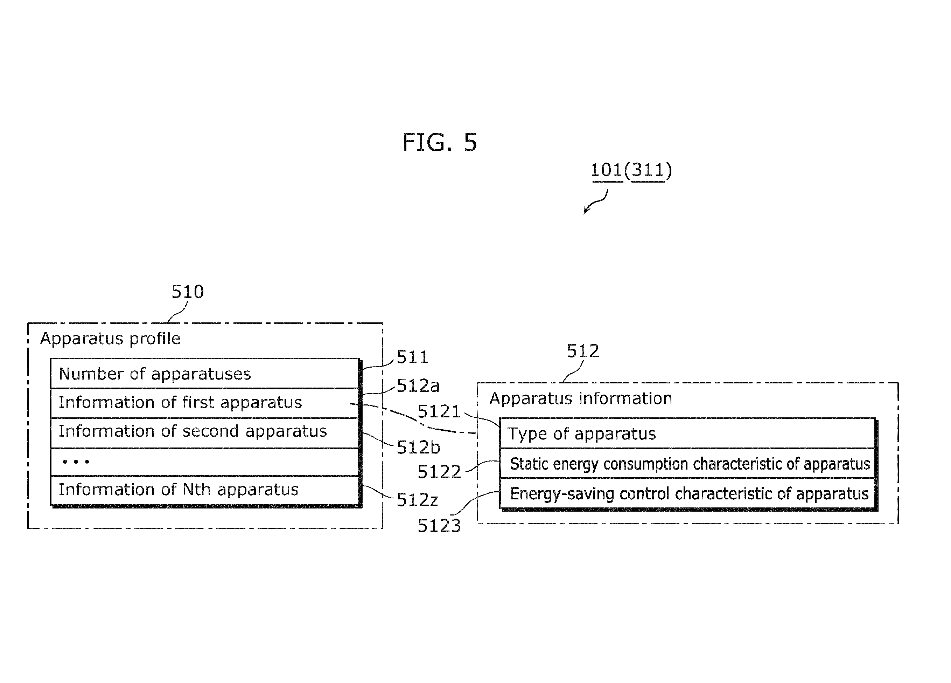

   FIG. 5 includes tables showing an apparatus profile.
[FIG. 6]

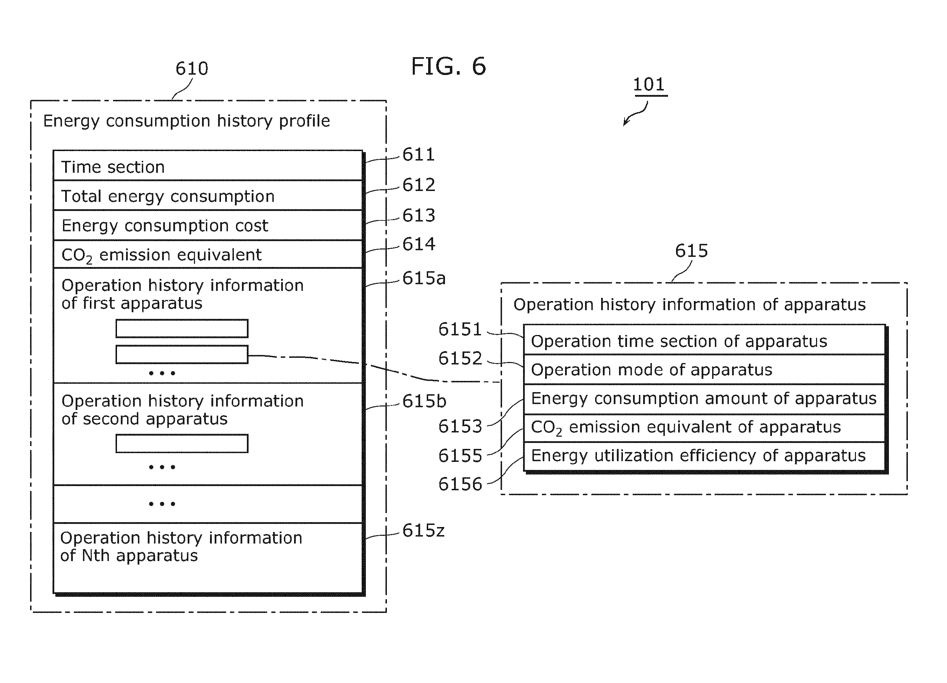

   FIG. 6 includes tables showing an energy consumption history profile.
[FIG. 7]

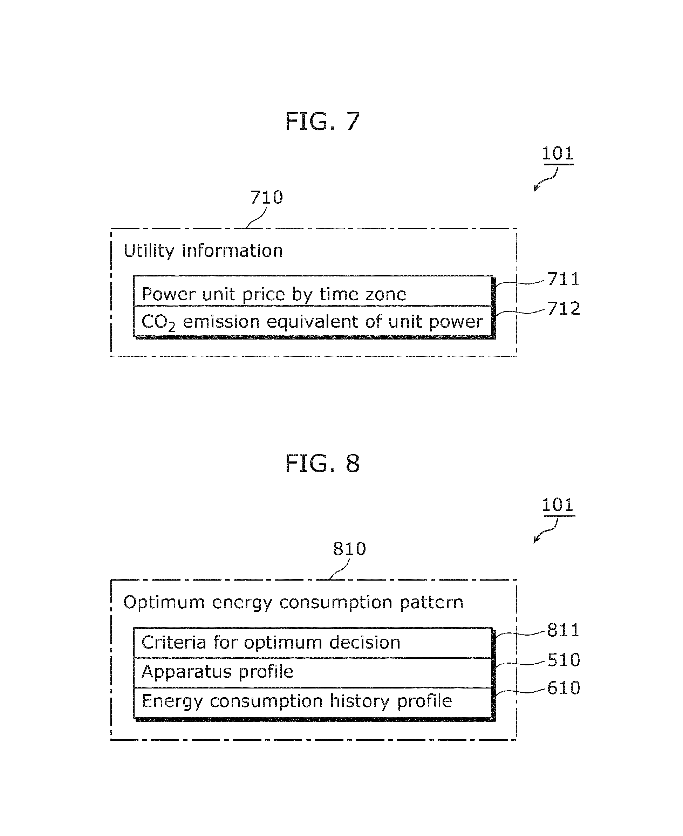

   FIG. 7 is a table showing utility information.
[FIG. 8]
   FIG. 8 is a table showing an optimum energy consumption pattern.
[FIG. 9]

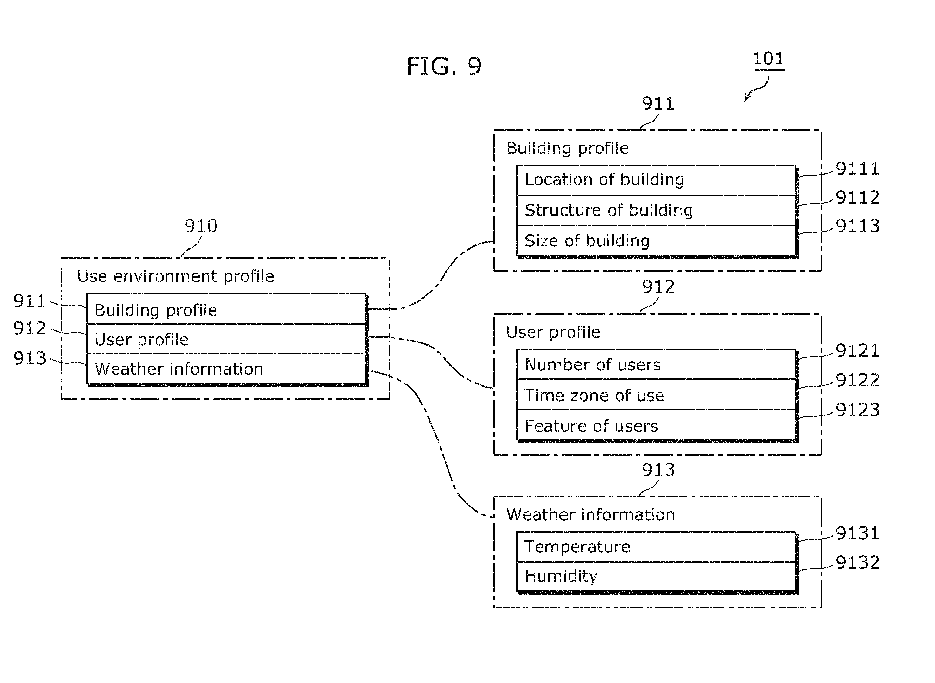

   FIG. 9 includes tables showing a use environment profile.
[FIG. 10]

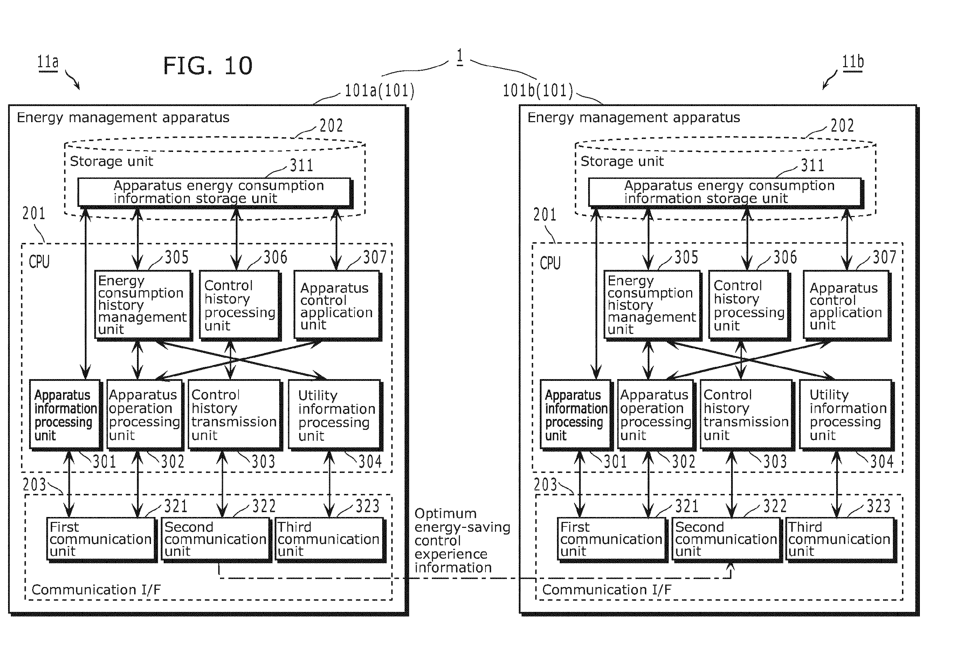

   FIG. 10 is a block diagram showing energy management apparatuses on a transmitting side and a receiving side, respectively.
[FIG. 11]

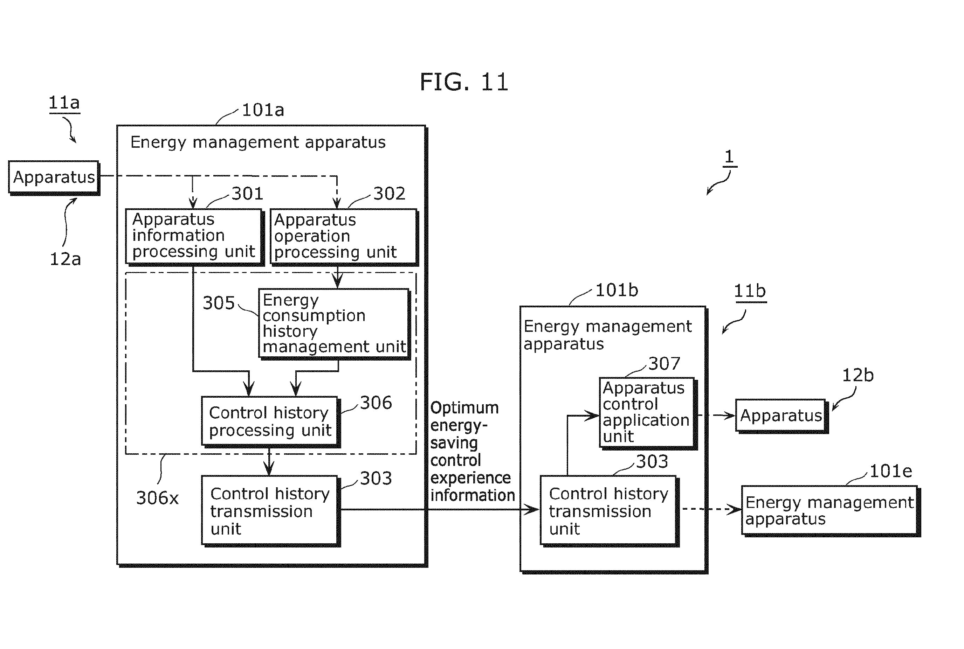

   FIG. 11 is a block diagram showing the energy management apparatuses on the transmitting side and the receiving side respectively, and another energy management apparatus.
[FIG. 12]

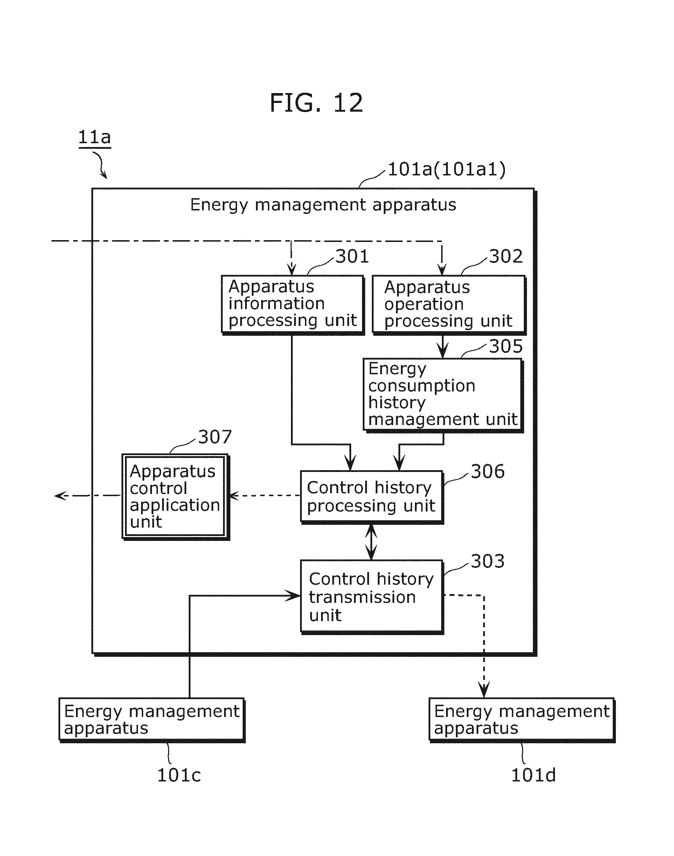

   FIG. 12 is another block diagram showing the energy management apparatuses on the transmitting side and the receiving side respectively, and another energy management apparatus.
[FIG. 13]

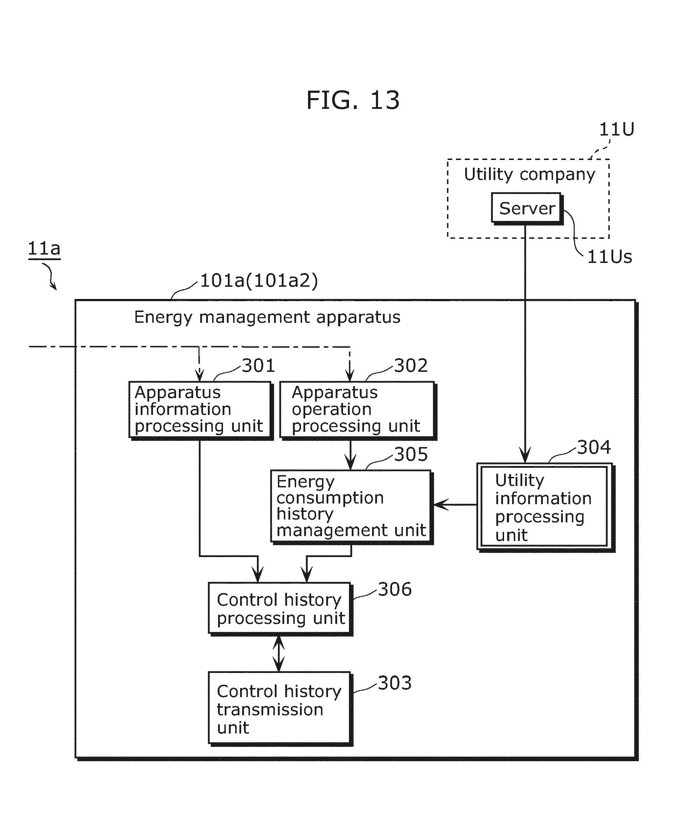

   FIG. 13 is a block diagram showing a utility company and the energy management apparatus.
[FIG. 14]

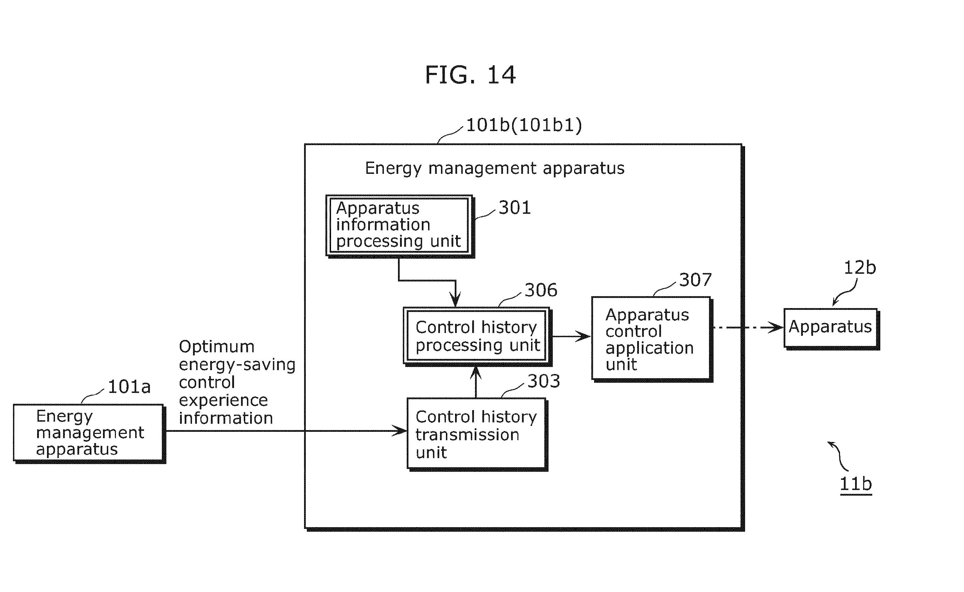

   FIG. 14 is another block diagram showing energy management apparatuses on the transmitting side and the receiving side, respectively.
[FIG. 15]

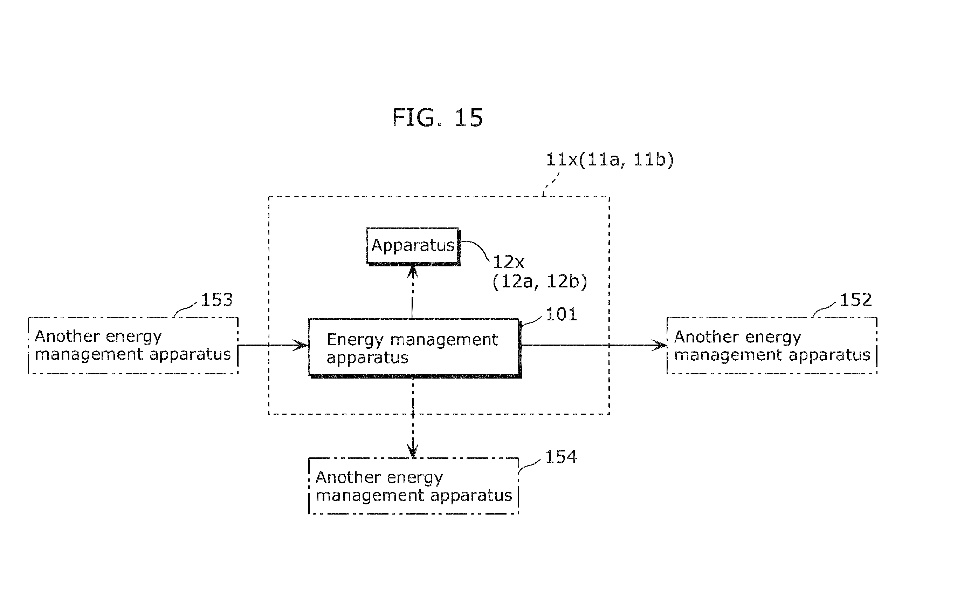

   FIG. 15 is a block diagram showing a system including four energy management apparatuses.
[FIG. 16]
   FIG. 16 is a block diagram showing an example of the system.

### [Description of Embodiments]

Hereafter, an embodiment of the present invention will be described referring to the drawings.

An energy management apparatus A (for example, a first energy management apparatus 101a in FIG. 11, FIG. 10, and FIG. 1, and an energy management apparatus 101 in FIG. 2) according to the embodiment serves to manage the supply and demand of energy in a building (for example, first building 11a in FIG. 1). The energy management apparatus A is connected to energy-related apparatuses (apparatus 12a) used in the building through an internal communication network (internal communication network 102a in FIG. 3). The energy management apparatus A includes an apparatus information processing unit (apparatus information processing unit 301), an apparatus operation processing unit (apparatus operation processing unit 302), an energy consumption history management unit (energy consumption history management unit 305), a control history processing unit (control history processing unit 306), and a control history transmission unit (control history transmission unit 303). The apparatus information processing unit (apparatus information processing unit 301) collects in advance information for identifying the function of the energy-related apparatuses and performance spec information thereof through the internal communication network, and stores such information as an apparatus profile (apparatus profile 510, apparatus information 512 in FIG. 5). The apparatus operation processing unit (apparatus operation processing unit 302) collects the operation history of the energy-related apparatuses and the consumption history of energy consumed by the operation through a first time unit. The energy consumption history management unit (energy consumption history management unit 305) stores the energy consumption history as an energy consumption history profile (energy consumption history profile 610 and operation history information 615 in FIG. 6). The control history processing unit (control history processing unit 306) extracts the energy consumption history, an amount of which to be evaluated on the basis of predetermined criteria is evaluated as optimum on the basis of the predetermined criteria, from among a plurality of the energy consumption history profiles representing an equivalent total amount of energy consumption (total energy consumption 612 in FIG. 6) through a second time unit. Here, the second time unit corresponds to the time unit for a second time section 611. The predetermined criteria includes, for example, criteria [1] to [4] to be subsequently described, and the amounts evaluated on the basis of the predetermined criteria include energy consumption amount 6153, an amount calculated from a CO₂ emission equivalent 6155, and an amount calculated from these amounts. The control history processing unit (control history processing unit 306) then generates an optimum energy consumption pattern (optimum energy consumption pattern 810 in FIG. 8) including the energy consumption history thus extracted. The control history transmission unit (control history transmission unit 303) transmits the generated optimum energy consumption pattern through a first external communication network (external communication network 103 in FIG. 3) to a second energy management apparatus (second energy management apparatus 101b) that manages the supply and demand of energy outside the building (first building 11a) and in another building (second building 11b) adjacent thereto.

Here, for example an apparatus profile containing the function information and the performance spec information collected in advance as above may be generated and stored. Also, for example an energy consumption history evaluated to be relatively appropriate on the basis of the predetermined criteria as above may be extracted.

Now, an energy management apparatus B (for example, a second energy management apparatus 101b in FIG. 11 and an energy management apparatus 101 in FIG. 10 and FIG. 2) according to the embodiment serves to manage the supply and demand of energy in a building (second building 11b). The energy management apparatus B includes a control history transmission unit (control history transmission unit 303), and an apparatus control application unit (apparatus control application unit 307). The control history transmission unit (control history transmission unit 303) receives an optimum energy consumption pattern (optimum energy consumption pattern 810h) from the first energy management apparatus (first energy management apparatus 101a) that controls the supply and demand of energy outside the building (second building 11b) of the second energy management apparatus and in another building (first building 11a) adjacent thereto. The apparatus control application unit (apparatus control application unit 307) accepts the received optimum energy consumption pattern as a reference plan for operating the energy-related apparatuses in the building of the second energy management apparatus and executes the optimum energy consumption pattern, in the case where similarity of the apparatus profile (apparatus profile 510) contained in the received optimum energy consumption pattern in comparison with the apparatus profile of the second energy management apparatus (second energy management apparatus 101b) is not lower than a predetermined threshold (to be subsequently described), and the received optimum energy consumption pattern is (decided to be) superior to the optimum energy consumption pattern of the second energy management apparatus (generated in the second energy management apparatus), on the basis of predetermined criteria (for example, superior or inferior in the criteria [1] to [4]).

The amount to be evaluated on the basis of the predetermined criteria may be a total amount of the energy consumption through the first time unit shorter than the second time unit which is relatively long, or a total CO₂ emission equivalent through the second time unit. Alternatively, an amount calculated from these amounts may be evaluated. The term "evaluate" refers to, for example, calculating from a certain amount (calculated amount) an evaluated value of this amount, the evaluated value indicating an amount of another evaluated value and superiority or inferiority with respect to the amount of the another evaluated value, on the basis of a difference from the another evaluated value.

Also, "evaluated to be optimum" refers to obtaining the highest evaluation among the plurality of energy consumption history profiles, for example being evaluated that the total energy consumption is the lowest.

Further, the expression "similarity of an apparatus profile with respect to another apparatus profile is higher than a predetermined threshold" may include the case where, for example, the apparatus profile is the first apparatus profile between a first apparatus profile and a second apparatus profile to be subsequently described. Here, the first apparatus profile refers to an apparatus profile that enables a control based on the optimum energy consumption pattern containing the first apparatus profile to be executed with respect to the second energy management apparatus that includes the another apparatus profile. The second apparatus profile refers to an apparatus profile that does not allow a control based on the optimum energy consumption pattern containing the first apparatus profile to be executed with respect to the second energy management apparatus that includes the another apparatus profile.

More specifically, the expression "similarity higher than a predetermined threshold" refers to the case where, for example, an apparatus profile is the same as another apparatus profile.

Thus, for example, while it is possible to execute the control based on the optimum energy consumption pattern containing the same apparatus profiles can be executed, it does not have to be possible to execute the control based on the optimum energy consumption pattern containing the apparatus profiles that are not the same.

Further details will be described here below.

FIG. 1 is a block diagram showing an outline of the process in which an optimum energy-saving control experience (optimum energy-saving control experience information) is instructed from a building A (first building 11a) to the other building B (second building 11b), in the case where the plurality of buildings according to the embodiment is exemplified by any given two buildings (for example, two houses). Hereunder, the configuration of the energy management apparatus 101 and a system 1, as well as operations of the constituents will be disclosed. In the subsequent passages, the optimum energy-saving control experience information may be abbreviated as control experience as the case may be, and other types of experience information may also be abbreviated.

### Configuration of energy management apparatus

FIG. 2 is a block diagram showing an internal configuration of the energy management apparatus 101.

The system 1 includes two energy management apparatuses 101, namely the first energy management apparatus 101a and the second energy management apparatus 101b (for example, FIGS. 1, 11).

The energy management apparatus 101 (FIG. 2) essentially includes a CPU 201, a storage unit 202, and a communication I/F (interface) 203.

The CPU 201 includes the apparatus information processing unit 301, the apparatus operation processing unit 302, the control history transmission unit 303, a utility information processing unit 304, the energy consumption history management unit 305, the control history processing unit 306, and the apparatus control application unit 307. Accordingly, the functions of the respective functional block such as the apparatus information processing unit 301 are realized by the CPU 201.

The storage unit 202 includes an apparatus energy consumption information storage unit 311.

The communication I/F 203 includes a first communication unit 321, a second communication unit 322, and a third communication unit 323.

Here, a part or whole of the energy management apparatus 101 may be, for example, a computer including the CPU 201, the storage unit 202, and so forth. In this case, the functions of the functional blocks such as the apparatus information processing unit 301 may be realized in the energy management apparatus 101 by execution of programs by the computer. The apparatus information processing unit 301 may be realized in the energy management apparatus 101 by allocating the function of the CPU 201 and other functions such as the storage unit 202 to the apparatus information processing unit 301. This also applies to the functional blocks other than the apparatus information processing unit 301.

The apparatus information processing unit 301 collects specific information (apparatus information) of the apparatus (object apparatus 12x in FIG. 15 (apparatus 12a or apparatus 12b in FIG. 1)) in the building (object building 11x in FIG. 15 (building A or building B in FIG. 1)) in which the energy management apparatus 101 is provided, through the first communication unit 321. The apparatus information processing unit 301 then stores the collected specific information in the apparatus energy consumption information storage unit 311. These operations are performed, for example, when the system of the energy management apparatus 101 is initialized, or when a new apparatus is added.

The apparatus operation processing unit 302 primarily performs the following two functions.

First, the apparatus operation processing unit 302 collects operation information of the apparatus (object apparatus 12x) in the building (object building 11x) of the energy management apparatus 101.

Second, the apparatus operation processing unit 302 executes an optimum control with respect to the apparatus (object apparatus 12x).

The control history transmission unit 303 delivers an optimum energy consumption pattern 810 shown in FIG. 8, transmitted to the energy management apparatus 101 from another energy management apparatus 153 (FIG. 15) different from the energy management apparatus 101, to the control history processing unit 306.

The above transmission may be made through a communication unit of the energy management apparatus 153 that is similar to the second communication unit 322 of the energy management apparatus 101.

The control history transmission unit 303 also transfers the optimum energy consumption pattern 810 transmitted to the energy management apparatus 101, upon receipt of a transfer instruction from the control history processing unit 306, to still another energy management apparatus 154 (FIG. 15) different from the energy management apparatus 153.

The utility information processing unit 304 receives, from a utility company 11U (server 11Us of utility company 11U in FIG. 3), utility information 710 shown in FIG. 7 transmitted to the energy management apparatus 101 through the third communication unit 323. The utility information processing unit 304 then provides the received utility information 710 to the energy consumption history management unit 305.

The energy consumption history management unit 305 generates an energy consumption history profile (energy consumption history) 610 shown in FIG. 6, on the basis of the apparatus operation history from the apparatus operation processing unit 302 and the utility information from the utility information processing unit 304. Then the energy consumption history management unit 305 stores the generated energy consumption history profile 610 in the apparatus energy consumption information storage unit 311.

The control history processing unit 306 primarily has two functions.

First, the control history processing unit 306 handles an optimum energy consumption pattern 810 similar to the foregoing optimum energy consumption pattern 810 from another energy management apparatus 153 delivered from the control history transmission unit 303. More specifically, the control history processing unit 306 decides whether an optimum energy consumption pattern 810 similar to the received one is present in the apparatus energy consumption information storage unit 311 of the energy management apparatus 101. The control history processing unit 306 also decides whether the received optimum energy consumption pattern 810 is superior, in the case where the similar optimum energy consumption pattern 810 is present. Then the control history processing unit 306 additionally stores the received optimum energy consumption pattern 810 in the case where the similar optimum energy consumption pattern 810 has been decided not to be present, or updates the current one to the received one in the case where the latter has been decided to be superior. In this case, where it has been decided that the similar optimum energy consumption pattern 810 is not present or that the received optimum energy consumption pattern 810 is superior, the control history processing unit 306 instructs the control history transmission unit 303 of the energy management apparatus 101 to transfer the received optimum energy consumption pattern 810 to still another energy management apparatus 154. Here, the term "similar optimum energy consumption pattern 810" refers to the case where, for example, the apparatus profile 510 contained therein is the same.

Second, the control history processing unit 306 performs a processing for the case where the energy consumption history profile 610 of the apparatus (object apparatus 12x) in the building (object building 11x) of the energy management apparatus 101 has been updated in the apparatus energy consumption information storage unit 311. Specifically, the control history processing unit 306 decides, when such an update is made, whether the updated energy consumption history profile 610 is optimum among the energy consumption history profiles 610 generated in the energy management apparatus 101. Then the control history processing unit 306 stores, in the case where the updated energy consumption history profile 610 is decided to be optimum, the optimum energy consumption pattern 810 containing the energy consumption history profile 610 decided to be optimum in the apparatus energy consumption information storage unit 311.

The apparatus control application unit 307 performs a processing based on the optimum energy consumption pattern 810 stored in the apparatus energy consumption information storage unit 311. Specifically, the apparatus control application unit 307 operates as follows when the optimum energy consumption pattern 810 thus far stored is updated to the new optimum energy consumption pattern 810 received from another energy management apparatus 153. The apparatus control application unit 307 decides whether the updated optimum energy consumption pattern 810 is applicable to the apparatus (object apparatus 12x) in the building (object building 11x) to which the apparatus control application unit 307 belongs. In the affirmative case, the apparatus control application unit 307 executes the control based on the updated (received) optimum energy consumption pattern 810 with respect to the apparatus (object apparatus 12x), through the apparatus operation processing unit 302. Thus, the apparatus control application unit 307 executes the control referring to the received optimum energy consumption pattern 810.

FIG. 5 includes tables showing the apparatus profiles.

The apparatus energy consumption information storage unit 311 stores such apparatus profiles 510 as those shown in FIG. 5.

The apparatus profile 510 includes specific information (information 512a of a first apparatus to information 512z of an Nth apparatus) of the apparatuses, such as the number of apparatuses 511, information 512a of the first apparatus, information 512b of the second apparatus, and so forth.

The information 512a of the first apparatus to the information 512z of the Nth apparatus each include, for example, specific apparatus information 512 shown in the right column of FIG. 5.

The specific apparatus information 512 includes, for example, the type of the apparatus 5121 (air conditioner, refrigerator, washing and drying machine, dish washer, TV, illumination, and so forth), static energy consumption characteristics 5122 (rated power consumption, minimum power consumption, peak power consumption, and so on), and energy-saving control characteristics 5123 (availability of energy-saving mode, reduction range of power consumption, and so on).

FIG. 6 includes tables showing the energy consumption history profile 610.

The apparatus energy consumption information storage unit 311 also stores the energy consumption history profile 610 as those shown in FIG. 6.

The energy consumption history profile 610 includes, for example, the second time section 611, total energy consumption 612 through the second time section 611, an energy consumption cost 613, and a CO₂ emission equivalent 614. The second time section 611 corresponds to the second time unit which is relatively long, for example a day (24 hours).

The energy consumption history profile 610 also includes operation history information group (operation history information group 615a of the first apparatus to operation history information group 615z of the Nth apparatus) of the apparatuses, such as the operation history information (operation history information group) 615a of the first apparatus, the operation history information 615b of the second apparatus, and so forth.

Here, the energy consumption history profile 610 may contain the above cited information corresponding to the second time section 611, with respect to each of a plurality of second time sections 611.

Each of the operation history information groups (for example, operation history information group 615a of the first apparatus) includes one or more pieces of operation history information 615 (right column of FIG. 6) of the apparatus of that operation history information group.

Specific operation history information 615 (right column of FIG. 6) of the apparatus includes, for example, a time section of operation (first time section) 6151, an operation mode 6152, an energy consumption amount 6153, a CO₂ emission equivalent 6155, and energy utilization efficiency 6156 of the apparatus.

Here, the first time section 6151 is a time section of a time unit shorter than the time unit of the above mentioned second time section 611 (left column of FIG. 6). The first time section 6151 constitutes a part of the second time section 611 included in the energy consumption history profile 610 containing the operation history information group that includes the operation history information 615 corresponding to the first time section 6151.

Also, the first time section 6151 is a period different from first time sections 6151 included in all other operation history information 615 included in the operation history information group that includes the operation history information 615 corresponding to the first time section 6151.

The energy utilization efficiency 6156 (right column of FIG. 6) may be what is known as coefficient of performance (COP).

FIG. 7 is a table showing the utility information.

The utility information 710 is received from the utility company 11U (FIG. 3), and stored in the energy consumption history management unit 305 as mentioned earlier.

The utility information 710 includes, for example, a power unit price by time zone 711 and a CO₂ emission equivalent of unit power 712, as shown in FIG. 7.

FIG. 8 is a table showing the optimum energy consumption pattern 810.

The apparatus energy consumption information storage unit 311 also stores the optimum energy consumption pattern 810 shown in FIG. 8.

The optimum energy consumption pattern 810 includes, for example, criteria for optimum decision 811, the apparatus profile 510, and the energy consumption history profile 610.

The optimum energy consumption pattern 810 may also include the apparatus profile 510 (FIG. 5) and the energy consumption history profile 610 (FIG. 6) corresponding to (the apparatus of) the apparatus profile 510, as a set.

The optimum energy consumption pattern 810 may include a plurality of data sets, not only one data set.

Thus, the optimum energy consumption pattern 810 may include a plurality of apparatus profiles 510 different from each other, and a plurality of data sets each corresponding to each of the plurality of apparatus profiles 510.

In addition, the criteria for optimum decision 811 may also include a plurality of criteria for optimum decision 811 each corresponding to each of the plurality of data sets.

FIG. 9 includes tables showing the use environment profile 910.

The use environment profile 910 may be included, for example, in the apparatus profile 510 (FIG. 5).

As shown in FIG. 9, the use environment profile 910 includes a building profile 911, a user profile 912, and a weather information 913, for example.

The building profile 911 includes, for example, location of building 9111, structure of building 9112, and size of building 9113, as shown in the right column of FIG. 9.

The user profile 912 includes, for example, number of users 9121, time zone of use 9122, and feature of users 9123.

The weather information 913 includes, for example, temperature 9131 and humidity 9132.

The first communication unit 321 makes wired or wireless communication with the apparatus (object apparatus 12x in FIG. 15) in the object building 11x (FIG. 15) in which the energy management apparatus 101 is provided. The first communication unit 321 collects the specific information and operation information of the apparatus with which the communication is being made, and executes a control of that apparatus.

The second communication unit 322 makes communication with other energy management apparatuses (another energy management apparatus 152 to another energy management apparatus 154 in FIG. 15) in the buildings other than the object building 11x in which the energy management apparatus 101 is provided. Through the communication, the second communication unit 322 exchanges information about the optimum energy consumption pattern.

Each of the first communication unit 321 to the third communication unit 323 executes communication upon being instructed by other functional blocks (apparatus information processing unit 301 and so forth) that employ the communication unit. Other functional blocks issue such an instruction when making communication through the communication unit.

In the case where a management server (for example, management server 11M in FIG. 4) is available, the second communication unit 322 makes communication with the management server, so as to exchange information about the optimum energy consumption pattern.

The third communication unit 323 makes communication with the apparatus (for example, server 11Us in FIGS. 3 and 4) of the utility company (for example, utility company 11U in FIGS. 3 and 4), and acquires information such as the power unit price.

Both of the first energy management apparatus 101a and the second energy management apparatus 101b (FIG. 1, FIG. 10, FIG. 11) are the energy management apparatus 101 described above, and have all the above mentioned functions of the energy management apparatus 101 (see FIG. 10).

Each of the first energy management apparatus 101a and the second energy management apparatus 101b may have just a part of the mentioned functions of the energy management apparatus 101. Further details on this respect will be subsequently described (FIG. 11 to FIG. 14).

### System configuration

FIG. 3 illustrates a general configuration of the system 1 for executing the processes shown in FIG. 1.

For example, in the building A the first energy management apparatus 101a (FIG. 1) and the apparatus (apparatus 12a) are connected through the internal communication network 102a. As described above, the first energy management apparatus 101a makes communication with the apparatus (apparatus 12a) connected to the internal communication network 102a in the building A, utilizing the first communication unit 321 of the first energy management apparatus 101a.

Some types of apparatuses do not have to have a communication unit as the first communication unit 321 of the first energy management apparatus 101a. Such a type of apparatus may be connected to the internal communication network 102a through an agent (not shown) of that apparatus.

In the case where a sensor or a meter (not shown) is employed to collect the operation information of the apparatus, the collected information may be transmitted from the sensor or the meter to the first energy management apparatus 101a through the internal communication network 102a.

Regarding the foregoing aspects, the same also applies to the building B (see second energy management apparatus 101b, apparatus 12b, internal communication network 102b in FIG. 3).

Between the building A and the building B, the first energy management apparatus 101a and the second energy management apparatus 101b are connected to each other through the external communication network 103. Under such a circumstance, the mating energy management apparatuses, namely the first energy management apparatus 101a and the second energy management apparatus 101b execute the following processes. Specifically, the energy management apparatuses execute instruction and diffusion of the optimum energy consumption pattern 810, more precisely the optimum energy-saving control experience (energy consumption history profile 610) contained in the optimum energy consumption pattern 810, through the second communication unit 322 (FIG. 2) of the respective energy management apparatuses.

The buildings (energy management apparatuses) are each connected to the utility company 11U (server 11Us) through an external communication network 104.

Through the external communication network 104, information from the utility company 11U such as the power unit price is distributed by the server 11Us at a predetermined time interval. Specifically, the information such as the power unit price may be transmitted to a Smart Meter (not shown) provided in the respective buildings. In the case where the information such as the power unit price is transmitted to the Smart Meter, each energy management apparatus can receive the information such as the power unit price from the Smart Meter of the building (object building 11x in FIG. 15) in which the energy management apparatus is provided.

The information may thus be distributed to the respective energy management apparatuses by the server 11Us.

More specifically, the external communication network 103 may be a Neighbor Area Network (NAN). The Neighbor Area Network may be based on IEEE802.15.4 or Zigbee standard, for example. The internal communication network such as the internal communication network 102a may be a Home Area Network (HAN) or a Local Area Network (LAN).

FIG. 4 illustrates a general configuration of the system 1 (system 1a) in which the management server 11M is available.

In the system shown in FIG. 4, the instruction and diffusion of the optimum energy consumption pattern 810, specifically the optimum energy-saving control experience can be rapidly and efficiently performed between a plurality of buildings distant from each other, through the management server 11M and the external communication network 105. Here, the building A and the building B may be far away from each other or relatively close to each other. In other words, it suffices that one of the buildings be located within a predetermined neighborhood area of the other building. The management server 11M stores the apparatus profiles 510, the energy consumption history profiles 610, and the optimum energy consumption patterns 810 composed of an equal or greater number of types than those stored in the energy management apparatus 101. The management server 11M storing such data can proper instruct an initial energy-saving control experience to an energy management apparatus (second energy management apparatus 101b) of a newly added building (for example building B). Further, the management server 11M may have, for example, a part of the functional blocks included in the CPU 201 of the energy management apparatus 101 (FIG. 2). In other words, the management server 11M may execute a part of the functions of the energy management apparatus 101, for example those of the energy consumption history management unit and the control history processing unit, on behalf of the energy management apparatus 101.

The system 1 may be configured as the system 1a described above. Management of apparatus information

In the energy management apparatus 101, the management of the apparatus information is performed in the form of the apparatus profile 510 shown in FIG. 5. In the case of adding or removing an apparatus (object apparatus 12x in FIG. 15), the apparatus information processing unit 301 adds or deletes the information entry (for example, information of the first apparatus 512a in FIG. 5) of the added or removed apparatus, with respect to the apparatus profile 510 (FIG. 5).

The apparatuses (object apparatus 12x in FIG. 15) controlled by the energy management apparatus 101 may include an energy storage apparatus, in addition to the apparatuses that supply or consume energy. For example, a battery may be included as one of the plurality of apparatuses. In this case, the battery may be charged when the power unit price is low or the CO₂ emission equivalent of unit power is low, and discharged in the contrary cases. Also, the plurality of apparatuses that supply or consume energy provided in the building may include a gas appliance, in addition to electrical appliances. In this case, the information of both electricity and gas may be included as the energy consumption information to be controlled in the management of the apparatus information, so as to manage the information of the both.

Here, the emission equivalent refers to an amount of CO₂ that would be regarded as emitted by the operation of the apparatus, including, for example, an amount of CO₂ that would be emitted from a power plant by generating the power required for the operation of the apparatus.

### Extraction of optimum energy-saving control experience

To extract the optimum energy-saving control experience (optimum energy consumption history profile 610) from the plurality of energy consumption histories (energy consumption history profiles) 610 in the building (object building 11x) in which the energy management apparatus 101 is provided, for example one of the following four criteria [1] to [4] may be employed.

The plurality of energy consumption history profiles 610 for extraction may include the following. For example, the second time section 611 (FIG. 6) in each of the energy consumption history profiles 610 for extracting the optimum one therefrom may be the same as one of the second time sections selected as an index for extraction. Also, the total energy consumption 612 of those energy consumption history profiles 610 may be the same as one of the total energy consumption amounts selected as an index for extraction. Thus, the plurality of energy consumption history profiles 610 from which the optimum one is to be extracted corresponds to one or more of such energy consumption history profiles 610.

For example, with respect to a set including the second time section selected as an index for extraction and the total energy consumption selected as an index for extraction, the optimum energy consumption history profile 610 may be extracted from one or more energy consumption history profiles 610 containing that set of the second time section and the total energy consumption.

Each of the criteria [1] to criteria [4] employed for extracting the energy consumption history profile 610 is as follows.

According to the criteria [1], the energy consumption history profile 610 is extracted from among one or more energy consumption history profiles 610 containing the second time section 611 that is the same as the second time section selected as the index for extraction. Also, the total energy consumption 612 of the extracted energy consumption history profile 610 is the same as the total energy consumption selected as the index for extraction. Further, the peak energy consumption (subsequently described) in the extracted energy consumption history profile 610 through the first time section which is shorter is of a minimum level. The second time section 611 is the second time unit which is relatively long, for example one day (24 hours). The first time section is the first time unit shorter than the second time unit, for example one minute.

More specifically, for example the following calculation may be made with respect to each energy consumption history profile 610. In other words, the following calculation may be made with respect to each first time section included in the second time section 611 contained in the energy consumption history profile 610 that is the object of the calculation. Thus, with respect to each first time section, the total of the energy consumption amount 6153 of the plurality of pieces of operation history information 615 through that first time section may be calculated. Among the total energy consumption amounts of the first time section thus calculated, the greatest amount may be identified as the peak energy consumption of the energy consumption history profile 610. Then the energy consumption history profile 610 in which the peak energy consumption thus identified is at the minimum level may be extracted.

The criteria [2] may be defined as follows. One or more energy consumption history profiles 610 having the second time section 611 (for example, one day - 24 hours) that is the same as the second time section selected as the index for extraction can be assumed to exist. The one or more energy consumption history profiles 610 include, as a part thereof, one or more energy consumption history profiles 610 (mentioned above) in which the total energy consumption 612 is the same as the total energy consumption selected as the index for extraction. Thus, from among such one or more energy consumption history profiles 610 containing the same total energy consumption 612, the energy consumption history profile 610 in which the energy consumption cost 613 (FIG. 6) is at the minimum level may be extracted.

The criteria [3] may be defined as follows. One or more energy consumption history profiles 610 (mentioned above) containing the same total energy consumption 612 through the same second time section can be assumed to exist. Among such one or more energy consumption history profiles 610, the energy consumption history profile 610 in which the CO₂ emission equivalent 614 (FIG. 6) is at the minimum level may be extracted.

The criteria [4] may be defined as follows. One or more energy consumption history profiles 610 (above mentioned) containing the same total energy consumption 612 through the same second time section can be assumed to exist. Among such one or more energy consumption history profiles 610, the energy consumption history profile 610 in which a mean energy utilization efficiency (subsequently described) of all the apparatuses associated with the total energy consumption 612 is highest may be extracted. The mean energy utilization efficiency may be calculated as follows, for example. The items for the calculation include the total energy consumption 612, and the energy consumption amount (see energy consumption amount 6153) and the energy utilization efficiency (see energy utilization efficiency 6156) of each apparatus (operation history information 615 of each operation history information group) in the energy consumption history profile 610 shown in FIG. 6. With these items, the following formula may be employed: (energy consumption amount of apparatus 1 x energy consumption utilization efficiency of apparatus 1 + energy consumption amount of apparatus 2 x energy consumption utilization efficiency of apparatus 2 + ...)/total energy consumption.

In practical use, which of the criteria [1] to [4] is to be employed may be determined through the setting of the system or selection by the user.

In the case of the system 1a including the management server 11M (FIG. 4), the management server 11M may perform a simulation so as to calculate an optimum energy-saving control method on the basis of one of the criteria specified above. The optimum energy-saving control method thus calculated may be employed as a reference of the optimum energy-saving control experience.

The control history processing unit 306 thus extracts the optimum energy consumption history profile 610 (optimum energy-saving control experience), to thereby generate the optimum energy consumption pattern 810 that contains the extracted optimum energy-saving control experience.

### Transference of optimum energy-saving control experience

In the first energy management apparatus 101a, the following process is performed after extracting the optimum energy-saving control experience (energy consumption history profile 610) (Sa1, Sa3x (Sa2, Sa3), Sa4 in FIG. 1). The process includes storing the extracted energy consumption history profile 610 in the storage unit 202 (FIG. 2, FIG. 10) of the first energy management apparatus 101a. Then the first energy management apparatus 101a transmits the optimum energy consumption pattern 810 containing the stored energy consumption history profile 610 to the second energy management apparatus 101b (another energy management apparatus 152 in FIG. 15) in the neighborhood (Sa5). Specifically, the data to be transmitted is the optimum energy consumption pattern 810 generated from the extracted energy consumption history profile 610 and containing that energy consumption history profile 610, shown in FIG. 8.

The second energy management apparatus 101b in the neighborhood performs the following process. First, the second energy management apparatus 101b confirms whether the following optimum energy consumption pattern 810 is stored in the storage unit 202 (FIG. 2, FIG. 10). To be more detailed, the apparatus profile 510 of the optimum energy consumption pattern 810 transmitted from the first energy management apparatus 101a (another energy management apparatus 153) is stored. Then in this process the second energy management apparatus 101b confirms whether an optimum energy consumption pattern 810 having an apparatus profile 510 that is the same as the apparatus profile 510 is stored (Sb2 (Sb1 and Sb2)). In the affirmative case, the second energy management apparatus 101b decides, for example on the basis of the criteria for optimum decision, whether the received optimum energy consumption pattern 810 is superior to the optimum energy consumption pattern 810 stored in the second energy management apparatus 101b (Sb3 in Sb4x). In the case where the received optimum energy consumption pattern 810 is decided to be superior, the second energy management apparatus 101b replaces the optimum energy consumption pattern currently stored therein with the received optimum energy consumption pattern (Sb4 in Sb4x). Such replacement allows the apparatus 12b to be controlled in accordance with the received optimum energy consumption pattern.

Upon deciding that the received optimum energy consumption pattern is superior, the second energy management apparatus 101b transfers, at the same time as the replacing the optimum energy consumption pattern, the received optimum energy consumption pattern 810 to another energy management apparatus 101e (energy management apparatus 154 in FIG. 11, FIG. 15) in the neighborhood, other than the first and the second energy management apparatus 101a, 101b.

In contrast, in the case where the second energy management apparatus 101b has decided that the optimum energy consumption pattern thus far stored in the second energy management apparatus 101b is superior, the second energy management apparatus 101b does not replace the optimum energy consumption pattern, nor transfer the optimum energy consumption pattern to the energy management apparatus in the neighborhood.

### Application of optimum energy-saving control experience

The first energy management apparatus 101a performs, upon extracting the optimum energy-saving control experience (energy consumption history profile 610), the following process on the basis of the extracted optimum energy-saving control experience. The process includes controlling the apparatus (object apparatus 12x in FIG. 15) in the building A (object building 11x of the first energy management apparatus 101a).

Meanwhile, the second energy management apparatus 101b in the neighborhood receives the optimum energy consumption pattern 810 containing the apparatus profile 510 similar to the apparatus profile 510 of the second energy management apparatus 101b. In the case where the second energy management apparatus 101b has decided that the received optimum energy consumption pattern 810 is superior to the optimum energy consumption pattern 810 thus far stored in the second energy management apparatus 101b on the basis of the criteria for optimum decision, the second energy management apparatus 101b performs a process with reference to (the energy consumption history profile 610 contained in) the received optimum energy consumption pattern 810. This process includes controlling the apparatus (apparatus 12b, object apparatus 12x of the second energy management apparatus 101b) of the second energy management apparatus 101b referring to the received optimum energy consumption pattern 810 (Sb4 in Sb4x).

Here, the second energy management apparatus 101b may obtain the approval of the user of the apparatus (apparatus 12b) to be controlled through a predetermined user interface, before executing the control of the apparatus referring to the received optimum energy consumption pattern 810.

FIG. 10 is a block diagram showing the first energy management apparatus 101a and the second energy management apparatus 101b.

As shown in FIG. 10, the first energy management apparatus 101a may include all the functional blocks of, for example, the first energy management apparatus 101 shown in FIG. 2. Likewise, the second energy management apparatus 101b may also include all the functional blocks of the first energy management apparatus 101 shown in FIG. 2, as already mentioned.

FIG. 11 is another block diagram showing the first energy management apparatus 101a and the second energy management apparatus 101b.

FIGS. 12 and 13 are block diagrams each showing the first energy management apparatus 101a (101a1, 101a2).

On the other hand, as shown in FIGS. 11 to 13, it is not mandatory that the first energy management apparatus 101a include all the functional blocks in the first energy management apparatus 101a shown in FIG. 10. In other words, the first energy management apparatus 101a may only include a part of the functional blocks.

FIG. 14 is a block diagram showing the second energy management apparatus 101b.

Likewise, the second energy management apparatus 101b may also include only a part of the functional blocks in the second energy management apparatus 101b shown in FIG. 10, as shown in FIG. 14.

Here, the second energy management apparatus 101b (energy management apparatus 101) according to the embodiment may operate as follows. For example, the control history transmission unit (control history transmission unit 303) receives the optimum energy consumption pattern transmitted to the second energy management apparatus 101b through the first external communication network (external communication network 103), from the first energy management apparatus 101a (another energy management apparatus 153 in FIG. 15) that manages the supply and demand of energy outside the building of the second energy management apparatus 101b (second building 11b, object building 11x) and in another building (first building 11a) adjacent thereto. The control history processing unit (control history processing unit 306) compares the received optimum energy consumption pattern with the optimum energy consumption pattern currently stored in the second energy management apparatus 101b, to thereby decide whether the received optimum energy consumption pattern is superior on the basis of the predetermined criteria. In the affirmative case, the control history transmission unit (control history transmission unit 303) transfers the received optimum energy consumption pattern to other energy management apparatuses (energy management apparatus 101e in FIG. 11, another energy management apparatus 154 in FIG. 15) in other buildings (not shown) adjacent to the building of the second energy management apparatus 101b (second building 11b in FIG. 3).

Further, the following process may be performed. For example, the second energy management apparatus 101b includes the apparatus control application unit (apparatus control application unit 307), as shown in FIG. 14. The control history transmission unit receives the optimum energy consumption pattern containing the apparatus profile from the first energy management apparatus 101a (another energy management apparatus 153). The control history processing unit makes a second decision, in the case where similarity of the apparatus profile contained in the received optimum energy consumption pattern in comparison with the apparatus profile of the second energy management apparatus 101b is not lower than a predetermined threshold, and the received optimum energy consumption pattern is superior to the optimum energy consumption pattern of the second energy management apparatus 101b on the basis of predetermined criteria. The apparatus control application unit accepts the received optimum energy consumption pattern as a reference plan for operating the energy-related apparatus (apparatus 12b in FIG. 3) in the building of the second energy management apparatus 101b (second building 11b), when the second decision is made.

The second energy management apparatus 101b may include the apparatus information processing unit (apparatus information processing unit 301 in FIG. 14) that generates the use environment profile (use environment profile 910 in FIG. 9) on the basis of the building information (building profile 911 in FIG. 9) containing the structure, size, and location of the building of the second energy management apparatus 101b (second building 11b), the weather information (weather information 913 in FIG. 9) containing the temperature and humidity, and the user information (user profile 912 in FIG. 9) containing the number and feature of users of the energy-related apparatus (apparatus 12b) used in the building, and adds the generated use environment profile to the apparatus profile of (the apparatus 12b controlled by) the second energy management apparatus 101b, which is different from the apparatus profile in the received optimum energy consumption pattern. The control history processing unit may also compare, when comparing the apparatus profile in the optimum energy consumption pattern received from the first energy management apparatus 101a with the apparatus profile of the second energy management apparatus 101b, the similarity of the use environment profiles between these two apparatus profiles, and decide to accept the received optimum energy consumption pattern only in the case where the similarity of the use environment profile is not lower than the predetermined threshold.

The foregoing process performed by the second energy management apparatus 101b may also be performed by the first energy management apparatus 101a. Specifically, the first energy management apparatus 101a (FIG. 12) may transfer the optimum energy consumption pattern 810 received from a first other energy management apparatus 101c (another energy management apparatus 153 in FIG. 12) to a second other energy management apparatus 101d (another energy management apparatus 154). Also, the first energy management apparatus 101a (FIG. 12) may perform the control of the apparatus 12a of the first building 11a based on the optimum energy consumption pattern 810 received from the first other energy management apparatus 101c (FIG. 12), or execute the processing of the use environment profile 910.

As described above, a plurality of criteria (for example, criteria [1] to [4]) may be employed. Accordingly, the first energy management apparatus 101a may generate the optimum energy consumption pattern 810 through extraction on the basis of a first criteria which is different from a second criteria adopted by the second energy management apparatus 101b. The optimum energy consumption pattern 810 thus generated may be transmitted to the second energy management apparatus 101b. Further, the second energy management apparatus 101b may perform the control in accordance with the optimum energy consumption pattern 810 generated by the first energy management apparatus 101a on the basis of the first criteria.

In this case, the second energy management apparatus 101b can perform not only the control according to the optimum energy consumption pattern 810 based on the second criteria but also according to the optimum energy consumption pattern 810 generated by the first energy management apparatus 101a on the basis of the first criteria. Such an arrangement further ensures that the second energy management apparatus 101b can perform an appropriate control.

The first energy management apparatus 101a may extract the energy consumption history profile 610 on the basis of each of the plurality of criteria. Then the first energy management apparatus 101a may transmit a plurality of optimum energy consumption patterns 810 generated from the extraction based on the plurality of criteria to the second energy management apparatus 101b. The second energy management apparatus 101b may select one out of the plurality of optimum energy consumption patterns 810, and perform the control in accordance with the selected optimum energy consumption pattern 810.

Such an arrangement allows the optimum energy consumption pattern 810 based on the appropriate criteria to be selected even though the first energy management apparatus 101a has not adopted the appropriate criteria, thereby enabling the control in accordance with the optimum energy consumption pattern 810 based on the appropriate criteria to be performed.

Now, an energy-related apparatus (object apparatus 12x) is provided, for example, in the building (object building 11x in FIG. 15) in which the energy management apparatus 101 is provided.

Examples of the energy-related apparatus provided as above include a photovoltaic power generation system that generates electricity, a power storage system that stores electric power, a hot water tank that stores heat, a heat pump that generates heat, and a fuel cell that generates power and heat. Thus, the energy-related apparatuses that may be provided handle the energy in various manners such as supplying, receiving, consuming, or storing.

Normally a plurality of such energy-related apparatuses is provided in the object building 11x.

The energy management apparatus 101 controls each of the plurality of energy-related apparatuses provided in the object building 11x. Accordingly, the energy management apparatus 101 may constitute a part or whole of, for example, control equipment for a Home Energy Management System (HEMS).

The apparatuses (for example, apparatus 12a, apparatus 12b in FIG. 3) may be provided in each of the plurality of buildings (first building 11a, second building 11b). The apparatus thus provided may be controlled by the energy management apparatus 101 (first energy management apparatus 101a, second energy management apparatus 101b) of the building in which the apparatus is provided.

In a certain situation, the first energy management apparatus 101a may perform the following process.

For example, the control history processing unit 306 (see FIG. 11) may generate the optimum energy consumption pattern 810 (FIG. 8). The optimum energy consumption pattern 810 thus generated may indicate the type of the energy-related apparatus (type of apparatus 5121 in FIG. 5) and a first control detail (operation history information 615) for that energy-related apparatus more appropriate than a second control detail.

Then the control history transmission unit 303 may transmit the generated optimum energy consumption pattern 810 to the second energy management apparatus 101b (see FIG. 11).

On the part of the second energy management apparatus 101b, the following process may be performed in a certain situation.

The control history transmission unit 303 may receive the optimum energy consumption pattern 810 transmitted by the control history transmission unit 303 of the first energy management apparatus 101a.

The apparatus control application unit 307 may control, upon receipt of the optimum energy consumption pattern 810, the apparatus 12b in accordance with the first control detail indicated by the optimum energy consumption pattern 810, without performing the control in accordance with the second control detail.

To be more detailed, when the optimum energy consumption pattern 810 is received, the type of apparatus indicated by the received optimum energy consumption pattern 810 may or may not agree with the type of the apparatus 12b. The apparatus control application unit 307 may be kept from controlling the apparatus 12b in accordance with the first control detail in the case where the type of apparatus indicated by the received optimum energy consumption pattern 810 is not that of the apparatus 12b, but may perform the control in the case where the type of apparatus is the same.

Also, when the optimum energy consumption pattern 810 is received, for example the location of the first building 11a of the first energy management apparatus 101a indicated by the received optimum energy consumption pattern 810 may not be in the neighborhood area of the second building 11b. The apparatus control application unit 307 may be kept from performing the control in accordance with the first control detail, but may perform the control in accordance with the second control detail.

Alternatively, the control history processing unit 306 may decide whether the location of the first building 11a indicated by the received optimum energy consumption pattern 810 is within the neighborhood area.

In the case where the apparatus control application unit 307 has not decided that the location of the first building 11a is within the neighborhood area, the control in accordance with the second control detail may be performed, not in accordance with the first control detail.

Thus, managing the (supply and demand of the) energy may be construed as controlling the operation of the energy-related apparatuses that handle the energy.

The term "adjacent" includes the case where the region of a building abuts the region of another building, and where the region of a building is within a predetermined vicinity of the region of another building.

The "energy consumption history" about the consumed energy may be, for example, information indicating the consumed energy (energy consumption history).

The "total CO₂ emission equivalent" of the second time unit refers to, for example, a total amount of the CO₂ emission equivalent of each hour of the second time unit.

The optimum energy consumption pattern stored in the energy management apparatus refers to, for example, the optimum energy consumption pattern of the energy management apparatus generated through the operation of the object apparatus 12x under the control of the energy management apparatus.

The management server 11M may receive, for example, the data to be transmitted by the first energy management apparatus 101a to the second energy management apparatus 101b (for example, optimum energy consumption pattern). The management server 11M may also store the received data. The data thus stored may be received by the second energy management apparatus 101b.

The expression "accept and execute the optimum energy consumption pattern" refers to, for example, performing the control utilizing the optimum energy consumption pattern as reference, in other words performing the control in accordance with the control detail indicated by the optimum energy consumption pattern.

The details about the similarity of the use environment profile are similar to the example described about the similarity of the apparatus profile.

FIG. 16 is a block diagram showing an example of the system 1.

The control history transmission unit of the second energy management apparatus 101b (energy management apparatus 101) may identify, among the plurality of energy management apparatuses 101 (for example, energy management apparatuses 101h, 101i in FIG. 16), the energy management apparatus 101 (101h) in the neighborhood area 101bR (FIG. 16) of the second energy management apparatus 101b as the first energy management apparatus 101a from which the optimum energy consumption pattern 810 is received. Then the optimum energy consumption pattern 810h (FIG. 16) may be received from the first energy management apparatus 101a thus identified.

The second building 11b may be located, for example, in a downtown commercial area where many stores are open at night or midnight and hence the power consumption at night is higher (see FIG. 16).

The first building 11a may be a building (building 11h) other than the second building 11b, located within the neighborhood area 101bR (commercial area) of the second building 11b.

Under such a setting, the first energy management apparatus 101a in the first building 11a may transmit the optimum energy consumption pattern 810 (810h in FIG. 16) indicating the first control detail which is more appropriate than the second control detail in the case of controlling the building that consumes more energy at night, in other words the building in the downtown area (first building 11a, second building 11b).

The first energy management apparatus 101a may identify the control detail relatively more frequently employed in the first building 11a as the first control detail. The control detail frequently employed may be, for example, those frequently adopted in the first building 11a through the instruction of the habitants in the first building 11a.

The term "control detail" refers to, for example, information that specifies the type of operation of the energy-related apparatus, such as an operation mode or operation hour. Thus, the control detail may be such information utilized in known techniques.

In the second energy management apparatus 101b, the control history processing unit 306 may detect that the second energy management apparatus 101b has been installed in the second building 11b. More specifically, for example, the user may input the information of the installation.

Upon detecting the installation, the control history processing unit 306 may identify the location of the second building 11b (see FIG. 16) in which the second energy management apparatus 101b has been installed. This identification may be performed by an input of the user indicating the location.

Then the control history processing unit 306 may identify the neighborhood area of the identified location as the neighborhood area 101bR (FIG. 16) of the second building 11b. This identification may be performed by acquiring data of neighborhood area associated with the identified location, from a server (for example, server 11bS in FIG. 16) containing data of locations and the corresponding neighborhood area thereof. Here, the server 11bS may be the server 11Us shown in FIG. 3.

The data for identifying the neighborhood area (location of the second building 11b) may be inputted by the user. By such inputting, the neighborhood area identified on the basis of the inputted data may be identified as the neighborhood area 101bR of (the second building 11b including) the second energy management apparatus 101b.

Then the control history processing unit 306 may identify the energy management apparatus 101 (101h) of the building 11a in the identified neighborhood area 101bR (downtown area) as the first energy management apparatus 101a, from among the plurality of energy management apparatus 101 (for example, energy management apparatus 101h and energy management apparatus 101i in FIG. 16) connected to the second energy management apparatus 101b through the external communication network 103. In other words, the energy management apparatus 101 (101i) of the building 11i in an outside area 101iR relatively far from the neighborhood area 101bR does not have to be identified as the first energy management apparatus 101a.

For example, the control history processing unit 306 of the second energy management apparatus 101b may receive the location of the energy management apparatus 101 connected thereto, from each of one or more energy management apparatuses 101 (101h, 101i) connected thereto. The control history processing unit 306 may then decide whether the received location is within the identified neighborhood area 101bR. In the affirmative case, the energy management apparatus 101 (101h) connected to the second energy management apparatus 101b and decided to be located within the neighborhood area 101bR may be identified as the first energy management apparatus 101a. The location received from the energy management apparatus 101 (101h, 101i) may be the location transmitted thereto from the server 11bS.

The apparatus control application unit 307 may perform the control in accordance with the first control detail indicated by the optimum energy consumption pattern 810 (810h in FIG. 16) received from the identified first energy management apparatus 101a (101h), without performing the control in accordance with the second control detail which is different from the first control detail. More precisely, for example, the control in accordance with the first control detail may be relatively frequently performed, and the control in accordance with the second control detail may be less frequently performed. Here, the second control detail is for example the control detail indicated by the optimum energy consumption pattern 810 (810i in FIG. 16) generated by the energy management apparatus 101i in the outside area 101iR, which has not been identified as the first energy management apparatus 101a in the foregoing process.

The above mentioned process may be performed as follows.

In the neighborhood area 101bR, the optimum energy consumption pattern 810h generated by the energy management apparatus 101h located therein is sufficiently appropriate.

On the other hand, in the neighborhood area 101bR the optimum energy consumption pattern 810i generated by the energy management apparatus 101i located in the outside area 101iR is not sufficiently appropriate.

The term "sufficiently appropriate" refers to the case where, for example, the optimum energy consumption pattern is sufficiently appropriate for being utilized by the second energy management apparatus 101b.

When the system 1 is to be set up, an experiment may be performed. The neighborhood area 101bR may be the area proven to be appropriate through the experiment.

The arrangement thus far described allows the second energy management apparatus 101b to perform the control in accordance with the appropriate energy consumption pattern 810 (energy consumption pattern 810h in FIG. 16), without the need for the user of the second energy management apparatus 101b to perform complicated settings. Thus, appropriate controls can be easily performed.

Furthermore, the optimum energy consumption pattern 810h is generated by the apparatus in the neighborhood area 101bR (downtown area) and different from the optimum energy consumption pattern 810i generated in the outside area 101iR (outside the downtown area), and is hence sufficiently appropriate. Thus, the appropriateness can be enhanced.

Consequently, while an appropriate control can be easily executed, the executed control can be sufficiently appropriate.

Further, the appropriate operation can be performed not only in the first building 11a but also in the second building 11b, and therefore the appropriate operation can be performed in a greater number of buildings. This leads to more efficient reduction of CO₂ emission.

Thus, as already described, the energy-saving control experience information (optimum energy consumption pattern 810h) can be shared by the plurality of buildings (two buildings 11b, 11h) in the same area (neighborhood area 101bR).

Therefore, the control in accordance with the appropriate control detail can be rapidly, easily, and surely performed, also in the second building 11b.

In each of the first energy management apparatus 101a and the second energy management apparatus 101b, a plurality of combinations of the control history transmission unit 303 and so forth can be established. Such combinations can create synergistic effects. In contrast, the conventional techniques lack in one or more of the foregoing configurations, and hence the synergistic effect cannot be expected. In this aspect, the first energy management apparatus 101a and the second energy management apparatus 101b are distinct from the conventional techniques.

To realize one or more of the foregoing functions, a computer program may be developed; a storage medium containing the computer program may be made up; and an integrated circuit for performing the functions may be made up.

Minor details of the system 1 may be realized in any form among numerous appropriate forms. For example, a form that can be easily reached by those skilled in the art may be adopted for those details, or a form that cannot be easily conceived such as an improvement invention may be adopted. In either case, a system to which the present invention is applied is included in the scope of the system 1.

Further, the present invention provides an instruction method that allows an optimum energy-saving control experience with respect to a plurality of apparatuses in a building to be automatically and rapidly shared in a certain area.

Although the present invention has been described with reference to the foregoing embodiment, it is to be understood that the present invention is in no way limited to the embodiment, but various modifications may be made within the scope and spirit of the present invention.

### [Industrial Applicability]

The energy management apparatus, and the instruction method of the energy-saving control experience of the energy management apparatus according to the present invention provide the advantage that the energy-saving control experience can be shared (first and second energy management apparatus 101a, 101b in FIG. 16) in a certain area (for example, neighborhood area 101bR in FIG. 16), and is useful as both apparatus and method for suppressing energy consumption and reduction of CO₂ emission. The method disclosed above is applicable not only to an area but also to a larger range where sufficient similarity is secured, and to office buildings in addition to houses.

### [Reference Signs List]

- 101: Energy management apparatus
- 201: CPU
- 202: Storage unit
- 203: Communication I/F
- 301: Apparatus information processing unit
- 302: Apparatus operation processing unit
- 303: Control history transmission unit
- 304: Utility information processing unit
- 305: Energy consumption history management unit
- 306: Control history processing unit
- 307: Apparatus control application unit
- 311: Apparatus energy consumption information storage unit
- 11U: Utility company
- 11M: Management server

## Claims

1. An energy management apparatus that manages supply and demand of an energy in a building, said apparatus comprising:
an apparatus information processing unit connected to an energy-related apparatus used in the building through an internal communication network, and configured to collect in advance information of a function and performance spec of the energy-related apparatus through the internal communication network and to store the information as an apparatus profile;
an apparatus operation processing unit configured to collect an energy consumption history including an operation history of the energy-related apparatus and the energy consumed through a first time unit by operating the energy-related apparatus;
an energy consumption history management unit configured to store the energy consumption history as an energy consumption history profile;
a control history processing unit configured to extract the energy consumption history that contains an amount evaluated as optimum on the basis of predetermined criteria, from among a plurality of the energy consumption history profiles representing substantially the same total amount of energy consumption through a second time unit, and to generate an optimum energy consumption pattern including the extracted energy consumption history; and
a control history transmission unit configured to transmit the generated optimum energy consumption pattern through a first external communication network to a second energy management apparatus that controls supply and demand of an energy outside the building and in a building adjacent thereto.

2. The energy management apparatus according to Claim 1,
wherein the amount evaluated on the basis of the predetermined criteria is one of a total amount of energy consumption through the first time unit shorter than the second time unit, and a total CO₂ emission equivalent through the second time unit.

3. The energy management apparatus according to Claim 1,
wherein said control history transmission unit is configured to receive an optimum energy consumption pattern transmitted from a third energy management apparatus to said energy management apparatus being a first energy management apparatus through a first external communication network, said third energy management apparatus being configured to control supply and demand of the energy outside the building of said first energy management apparatus and in a building adjacent to the building of said first energy management apparatus,
said control history processing unit is configured to decide whether the received optimum energy consumption pattern is superior to the optimum energy consumption pattern of said first energy management apparatus on the basis of the predetermined criteria, and
said control history transmission unit is configured to transfer the received optimum energy consumption pattern to a fourth energy management apparatus in a building adjacent to the building of said first energy management apparatus, in the case where the received optimum energy consumption pattern is decided to be superior.

4. The energy management apparatus according to Claim 3, further comprising
an apparatus control application unit,
wherein said control history transmission unit is configured to receive the optimum energy consumption pattern containing an apparatus profile from said third energy management apparatus,
said control history processing unit is configured to make a second decision in the case where similarity of the apparatus profile contained in the received optimum energy consumption pattern in comparison with an apparatus profile of said first energy management apparatus is not lower than a predetermined threshold, and the received optimum energy consumption pattern is superior to an optimum energy consumption pattern of said first energy management apparatus on the basis of predetermined criteria, and
said apparatus control application unit is configured to accept the received optimum energy consumption pattern as a reference plan for operating the energy-related apparatus in the building of said first energy management apparatus and to execute the optimum energy consumption pattern.

5. The energy management apparatus according to Claim 1,
wherein an energy consuming apparatus and an energy storage apparatus are used as the energy-related apparatus in the building of said first energy management apparatus, and
said first energy management apparatus manages each of the energy consumed by the energy consuming apparatus and the energy stored in the energy storage apparatus.

6. The energy management apparatus according to Claim 1, further comprising
a utility information processing unit configured to receive fluctuation information of a unit price of the energy supplied in the building of said first energy management apparatus and a CO₂ emission equivalent corresponding to a unit energy of the energy from outside through a second communication network,
wherein said energy consumption history management unit is configured to calculate a cost of the consumed energy and the CO₂ emission equivalent corresponding to the consumed energy on the basis of the received fluctuation information.

7. An energy management apparatus that manages supply and demand of an energy in a building, said apparatus comprising:
a control history transmission unit configured to receive an optimum energy consumption pattern from a first energy management apparatus that controls supply and demand of an energy outside the building of said energy management apparatus being a second energy management apparatus and in a building adjacent thereto; and
an apparatus control application unit configured to accept the received optimum energy consumption pattern as a reference plan for operating energy-related apparatuses in the building of said second energy management apparatus and to execute the optimum energy consumption pattern, in the case where similarity of an apparatus profile contained in the received optimum energy consumption pattern in comparison with an apparatus profile of said second energy management apparatus is not lower than a predetermined threshold, and the received optimum energy consumption pattern is superior to an optimum energy consumption pattern of said second energy management apparatus on the basis of predetermined criteria.

8. The energy management apparatus according to Claim 7, further comprising
a control history processing unit,
wherein said second energy management apparatus is connected to a common management server to which said first energy management apparatus is connected, through a third external communication network,
said control history transmission unit is configured to receive, from the management server, the optimum energy consumption pattern transmitted from said first energy management apparatus,
said control history processing unit is configured to decide to accept the received optimum energy consumption pattern as a reference plan for operating energy-related apparatuses in the building of said second energy management apparatus and to execute the optimum energy consumption pattern, in the case where similarity of an apparatus profile contained in the received optimum energy consumption pattern in comparison with an apparatus profile of said second energy management apparatus is not lower than a predetermined threshold, and the received optimum energy consumption pattern is superior to an optimum energy consumption pattern of said second energy management apparatus on the basis of the predetermined criteria, and
said apparatus control application unit is configured to accept and execute the received optimum energy consumption pattern, in accordance with the decision of said control history processing unit.

9. The energy management apparatus according to Claim 8, further comprising
an apparatus information processing unit configured to generate a use environment profile on the basis of building information containing structure, size, and location of the building of said second energy management apparatus, weather information containing temperature and humidity, and user information containing the number and feature of users of the energy-related apparatus used in the building, and to add the generated use environment profile to the apparatus profile of said second energy management apparatus,
wherein said control history processing unit is configured to compare, when comparing the apparatus profile in the optimum energy consumption pattern received from said first energy management apparatus with the apparatus profile of said second energy management apparatus, similarity of the use environment profiles between the two apparatus profiles, and to decide to accept the received optimum energy consumption pattern only in the case where the similarity of the use environment profile is not lower than the predetermined threshold.

10. An energy management system comprising:
a first energy management apparatus that manages supply and demand of an energy in a first building; and
a second energy management apparatus that manages supply and demand of an energy in a second building,
wherein said first energy management apparatus includes:
an apparatus information processing unit connected to an energy-related apparatus used in the first building through an internal communication network, and configured to collect in advance information of a function and performance spec of the energy-related apparatus through the internal communication network and to store the information as an apparatus profile;
an apparatus operation processing unit configured to collect an energy consumption history including an operation history of the energy-related apparatus and the energy consumed through a first time unit by operating the energy-related apparatus;
an energy consumption history management unit configured to store the energy consumption history as an energy consumption history profile;
a control history processing unit configured to extract the energy consumption history that contains an amount evaluated as optimum on the basis of predetermined criteria, the amount corresponding to the first time unit shorter than a second time unit, from among a plurality of the energy consumption history profiles representing substantially the same total amount of energy consumption through the second time unit, and to generate an optimum energy consumption pattern including the extracted energy consumption history; and
a control history transmission unit configured to transmit the generated optimum energy consumption pattern through a first external communication network to said second energy management apparatus that controls supply and demand of the energy outside the first building and in the second building adjacent thereto, and
said second energy management apparatus includes:
a control history transmission unit configured to receive the optimum energy consumption pattern transmitted by said control history transmission unit of said first energy management apparatus, from said first energy management apparatus that controls supply and demand of the energy outside the second building of said second energy management apparatus and in the first building adjacent to the second building; and
an apparatus control application unit configured to accept the received optimum energy consumption pattern as a reference plan for operating the energy-related apparatuses in the second building of said second energy management apparatus and to execute the optimum energy consumption pattern, in the case where similarity of an apparatus profile contained in the received optimum energy consumption pattern in comparison with an apparatus profile of said second energy management apparatus is not lower than a predetermined threshold, and the received optimum energy consumption pattern is superior to an optimum energy consumption pattern of said second energy management apparatus on the basis of the predetermined criteria.

11. A method of managing supply and demand of an energy in a building using an energy management apparatus, said method comprising:
collecting in advance information of a function and performance spec of an energy-related apparatus used in the building through an internal communication network connecting the energy-related apparatus and the energy management apparatus, and storing the information as an apparatus profile;
collecting an energy consumption history including an operation history of the energy-related apparatus and the energy consumed through a first time unit by operating the energy-related apparatus;
storing the energy consumption history as an energy consumption history profile;
extracting the energy consumption history that contains an amount evaluated as optimum on the basis of predetermined criteria, the amount corresponding to the first time unit shorter than a second time unit, from among a plurality of the energy consumption history profiles representing substantially the same total amount of energy consumption through the second time unit, and generating an optimum energy consumption pattern including the extracted energy consumption history; and
transmitting the generated optimum energy consumption pattern through a first external communication network to a second energy management apparatus that controls supply and demand of an energy outside the building and in a building adjacent thereto.

12. A method of managing supply and demand of an energy in a building using an energy management apparatus, said method comprising:
receiving an optimum energy consumption pattern from a first energy management apparatus that controls supply and demand of an energy outside the building of a second energy management apparatus and in a building adjacent to the building of said second energy management apparatus; and
accepting the received optimum energy consumption pattern as a reference plan for operating an energy-related apparatus in the building of said second energy management apparatus and executing the optimum energy consumption pattern, in the case where similarity of an apparatus profile contained in the received optimum energy consumption pattern in comparison with an apparatus profile of said second energy management apparatus is not lower than a predetermined threshold, and the received optimum energy consumption pattern is superior to an optimum energy consumption pattern of said second energy management apparatus on the basis of predetermined criteria.

## Amended claims

### Amended claims under Art. 19.1 PCT

**1.** An energy management apparatus that manages supply and demand of an energy in a building, said apparatus comprising:
an apparatus information processing unit connected to an energy-related apparatus used in the building through an internal communication network, and configured to collect in advance information of a function and performance spec of the energy-related apparatus through the internal communication network and to store the information as an apparatus profile;
an apparatus operation processing unit configured to collect an energy consumption history including an operation history of the energy-related apparatus and the energy consumed through a first time unit by operating the energy-related apparatus;
an energy consumption history management unit configured to store the energy consumption history as an energy consumption history profile;
a control history processing unit configured to extract the energy consumption history that contains an amount evaluated as optimum on the basis of predetermined criteria, from among a plurality of the energy consumption history profiles representing substantially the same total amount of energy consumption through a second time unit, and to generate an optimum energy consumption pattern including the extracted energy consumption history; and
a control history transmission unit configured to transmit the generated optimum energy consumption pattern through a first external communication network to a second energy management apparatus that controls supply and demand of an energy outside the building and in a building adjacent thereto.

**2.** The energy management apparatus according to Claim 1,
wherein the amount evaluated on the basis of the predetermined criteria is one of a total amount of energy consumption through the first time unit shorter than the second time unit, and a total CO₂ emission equivalent through the second time unit.

**3.** The energy management apparatus according to Claim 1,
wherein said control history transmission unit is configured to receive an optimum energy consumption pattern transmitted from a third energy management apparatus to said energy management apparatus being a first energy management apparatus through a first external communication network, said third energy management apparatus being configured to control supply and demand of the energy outside the building of said first energy management apparatus and in a building adjacent to the building of said first energy management apparatus,
said control history processing unit is configured to decide whether the received optimum energy consumption pattern is superior to the optimum energy consumption pattern of said first energy management apparatus on the basis of the predetermined criteria, and
said control history transmission unit is configured to transfer the received optimum energy consumption pattern to a fourth energy management apparatus in a building adjacent to the building of said first energy management apparatus, in the case where the received optimum energy consumption pattern is decided to be superior.

**4.** The energy management apparatus according to Claim 3, further com prising
an apparatus control application unit,
wherein said control history transmission unit is configured to receive the optimum energy consumption pattern containing an apparatus profile from said third energy management apparatus,
said control history processing unit is configured to make a second decision in the case where similarity of the apparatus profile contained in the received optimum energy consumption pattern in comparison with an apparatus profile of said first energy management apparatus is not lower than a predetermined threshold, and the received optimum energy consumption pattern is superior to an optimum energy consumption pattern of said first energy management apparatus on the basis of predetermined criteria, and
said apparatus control application unit is configured to accept the received optimum energy consumption pattern as a reference plan for operating the energy-related apparatus in the building of said first energy management apparatus and to execute the optimum energy consumption pattern.

**5.** The energy management apparatus according to Claim 1,
wherein an energy consuming apparatus and an energy storage apparatus are used as the energy-related apparatus in the building of said first energy management apparatus, and
said first energy management apparatus manages each of the energy consumed by the energy consuming apparatus and the energy stored in the energy storage apparatus.

**6.** The energy management apparatus according to Claim 1, further com prising
a utility information processing unit configured to receive fluctuation information of a unit price of the energy supplied in the building of said first energy management apparatus and a CO₂ emission equivalent corresponding to a unit energy of the energy from outside through a second communication network,
wherein said energy consumption history management unit is configured to calculate a cost of the consumed energy and the CO₂ emission equivalent corresponding to the consumed energy on the basis of the received fluctuation information.

**7.** Amended) An energy management apparatus that manages supply and demand of an energy in a building, said apparatus comprising:
a control history transmission unit configured to receive an optimum energy consumption pattern of a first energy management apparatus that controls supply and demand of an energy outside the building of said energy management apparatus being a second energy management apparatus and in a building adjacent thereto; and
an apparatus control application unit configured to accept the received optimum energy consumption pattern as a reference plan for operating energy-related apparatuses in the building of said second energy management apparatus and to execute the optimum energy consumption pattern, in the case where similarity of an apparatus profile contained in the received optimum energy consumption pattern in comparison with an apparatus profile of said second energy management apparatus is not lower than a predetermined threshold, and the received optimum energy consumption pattern is superior to an optimum energy consumption pattern of said second energy management apparatus on the basis of predetermined criteria.

**8.** Amended) The energy management apparatus according to Claim 7, further com prising
a control history processing unit,
wherein said second energy management apparatus is connected to a common management server to which said first energy management apparatus is connected, through a third external communication network,
said control history transmission unit is configured to receive, from the management server, the optimum energy consumption pattern of said first energy management apparatus,
said control history processing unit is configured to decide to accept the received optimum energy consumption pattern as a reference plan for operating energy-related apparatuses in the building of said second energy management apparatus and to execute the optimum energy consumption pattern, in the case where sim ilarity of an apparatus profile contained in the received optimum energy consumption pattern in comparison with an apparatus profile of said second energy management apparatus is not lower than a predetermined threshold, and the received optimum energy consumption pattern is superior to an optimum energy consumption pattern of said second energy management apparatus on the basis of the predetermined criteria, and
said apparatus control application unit is configured to accept and execute the received optimum energy consumption pattern, in accordance with the decision of said control history processing unit.

**9.** The energy management apparatus according to Claim 8, further com prising
an apparatus information processing unit configured to generate a use environment profile on the basis of building information containing structure, size, and location of the building of said second energy management apparatus, weather information containing temperature and humidity, and user information containing the number and feature of users of the energy-related apparatus used in the building, and to add the generated use environment profile to the apparatus profile of said second energy management apparatus,
wherein said control history processing unit is configured to compare, when comparing the apparatus profile in the optimum energy consumption pattern received from said first energy management apparatus with the apparatus profile of said second energy management apparatus, similarity of the use environment profiles between the two apparatus profiles, and to decide to accept the received optimum energy consumption pattern only in the case where the similarity of the use environment profile is not lower than the predetermined threshold.

**10.** An energy management system comprising:
a first energy management apparatus that manages supply and demand of an energy in a first building; and
a second energy management apparatus that manages supply and demand of an energy in a second building,
wherein said first energy management apparatus includes:
an apparatus information processing unit connected to an energy-related apparatus used in the first building through an internal communication network, and configured to collect in advance information of a function and performance spec of the energy-related apparatus through the internal communication network and to store the information as an apparatus profile;
an apparatus operation processing unit configured to collect an energy consumption history including an operation history of the energy-related apparatus and the energy consumed through a first time unit by operating the energy-related apparatus;
an energy consumption history management unit configured to store the energy consumption history as an energy consumption history profile;
a control history processing unit configured to extract the energy consumption history that contains an amount evaluated as optimum on the basis of predetermined criteria, the amount corresponding to the first time unit shorter than a second time unit, from among a plurality of the energy consumption history profiles representing substantially the same total amount of energy consumption through the second time unit, and to generate an optimum energy consumption pattern including the extracted energy consumption history; and
a control history transmission unit configured to transmit the generated optimum energy consumption pattern through a first external communication network to said second energy management apparatus that controls supply and demand of the energy outside the first building and in the second building adjacent thereto, and
said second energy management apparatus includes:
a control history transmission unit configured to receive the optimum energy consumption pattern transmitted by said control history transmission unit of said first energy management apparatus, from said first energy management apparatus that controls supply and demand of the energy outside the second building of said second energy management apparatus and in the first building adjacent to the second building; and
an apparatus control application unit configured to accept the received optimum energy consumption pattern as a reference plan for operating the energy-related apparatuses in the second building of said second energy management apparatus and to execute the optimum energy consumption pattern, in the case where sim ilarity of an apparatus profile contained in the received optimum energy consumption pattern in comparison with an apparatus profile of said second energy management apparatus is not lower than a predetermined threshold, and the received optimum energy consumption pattern is superior to an optimum energy consumption pattern of said second energy management apparatus on the basis of the predetermined criteria.

**11.** A method of managing supply and demand of an energy in a building using an energy management apparatus, said method comprising:
collecting in advance information of a function and performance spec of an energy-related apparatus used in the building through an internal communication network connecting the energy-related apparatus and the energy management apparatus, and storing the information as an apparatus profile;
collecting an energy consumption history including an operation history of the energy-related apparatus and the energy consumed through a first time unit by operating the energy-related apparatus;
storing the energy consumption history as an energy consumption history profile;
extracting the energy consumption history that contains an amount evaluated as optimum on the basis of predetermined criteria, the amount corresponding to the first time unit shorter than a second time unit, from among a plurality of the energy consumption history profiles representing substantially the same total amount of energy consumption through the second time unit, and generating an optimum energy consumption pattern including the extracted energy consumption history; and
transmitting the generated optimum energy consumption pattern through a first external communication network to a second energy management apparatus that controls supply and demand of an energy outside the building and in a building adjacent thereto.

**12.** A method of managing supply and demand of an energy in a building using an energy management apparatus, said method comprising:
receiving an optimum energy consumption pattern from a first energy management apparatus that controls supply and demand of an energy outside the building of a second energy management apparatus and in a building adjacent to the building of said second energy management apparatus; and
accepting the received optimum energy consumption pattern as a reference plan for operating an energy-related apparatus in the building of said second energy management apparatus and executing the optimum energy consumption pattern, in the case where similarity of an apparatus profile contained in the received optimum energy consumption pattern in comparison with an apparatus profile of said second energy management apparatus is not lower than a predetermined threshold, and the received optimum energy consumption pattern is superior to an optimum energy consumption pattern of said second energy management apparatus on the basis of predetermined criteria.
